## Europäisches Patentamt

## European Patent Office

## Office européen des brevets

(19)

(11) **EP 1 469 053 A1**

(12) **EUROPÄISCHE PATENTANMELDUNG**

(43) Veröffentlichungstag:
**20.10.2004 Patentblatt 2004/43**

(51) Int Cl.7: **C09J 7/02**

(21) Anmeldenummer: **04006286.1**

(22) Anmeldetag: **17.03.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL LT LV MK**

(30) Priorität: **16.04.2003 DE 10317788**

(71) Anmelder: **tesa AG**
**20253 Hamburg (DE)**

(72) Erfinder:
• **Junghans, Andreas**
**22457 Hamburg (DE)**

• **Schümann, Uwe, Dr.**
**25421 Pinneberg (DE)**
• **Weiland, Kirstin**
**21035 Hamburg (DE)**
• **Lühmann, Bernd, Dr.**
**22844 Norderstedt (DE)**
• **Sunarto, Sianty**
**Singapore 270002 (SG)**
• **Hesse, Philippe**
**21244 Buchholz (DE)**
• **zu Putlitz, Bodo, Dr.**
**22339 Hamburg (DE)**

(54) **Wiederverwendbare, rückstands- und beschädigungsfrei wiederablösbare, elastische Klebfolie**

(57) Ein- oder beidseitig haftklebrige, mehrfach wiederverwendbare, elastische Klebfolie, bevorzugt in Form von Stanzlingen oder geschnittenen Formteilen, für das rückstands und beschädigungsfreie Wiederablösen von Verklebungen, insbesondere auf wenig festen Untergründen wie zum Beispiel Papier, sowohl durch Abschälen als auch durch dehnendes Verstrecken der Klebfolie,
dadurch gekennzeichnet, dass
die Klebefolie aus zumindest einer Lage eines Haftklebstoffes besteht,
die Klebfolie eine maximale Dehnbarkeit von größer 200 % und ein Rückstellungsvermögen von größer 60 % nach Verstreckung auf 2/3 ihrer maximalen Dehnung hat, und
der Haftklebstoff der Klebfolie auf einem chemisch vernetzten Polyurethan basiert, wobei die Ausgangsstoffe des chemisch vernetzten Polyurethans mindestens einen gegenüber Isocyanaten reaktiven Stoff mit einer Funktionalität größer 2,0 enthalten, und zwar zu einem Anteil von mindestens 5 Gew.-% bezogen auf die Polyurethanzusammensetzung, wobei

das Molekulargewicht mindestens eines der zur Bildung des Polyurethans eingesetzten Ausgangsstoffes größer oder gleich 1000 ist,

zur Bildung des Polyurethans mindestens difunktionelle Polyisocyanate eingesetzt werden,

das Verhältnis von maximaler Zugspannung zu Strippspannung größer 1,2, bevorzugt größer 1,5, besonders bevorzugt größer 2,0 ist und

die Zugspannung bei einer Dehnung von 200 % maximal 2,0 N/mm$^2$, bevorzugt maximal 1,0 N/mm$^2$, besonders bevorzugt maximal 0,5 N/mm$^2$ beträgt.

EP 1 469 053 A1

**Beschreibung**

Die Erfindung betrifft eine ein- oder beidseitig haftklebrige, nach Verschmutzung der Haftklebstoffoberfläche abwaschbare und mehrfach wiederverwendbare, in einer weiteren bevorzugten Ausführungsform papierne Haftgründe nicht oder nur gering durchfettende elastische Selbstklebefolie, bevorzugt in Form von Stanzlingen oder geschnittenen Formteilen für eine rückstands- und beschädigungsfrei wiederablösbare Verklebung, insbesondere auf wenig festen Untergründen wie zum Beispiel Papier, die sich sowohl durch dehnendes Verstrecken als auch durch Abschälen vom Verklebungsuntergrund wiederablösen lässt.

Eine häufige Anwendung transparenter Selbstklebefilme wie zum Beispiel dem tesa® Multifilm® der tesa AG, Hamburg (D), oder Scotch® Magic der Minnesota Mining and Manufacturing Co. Inc., St. Paul (USA), ist die temporäre Befestigung sehr leichter, zumeist flacher Gegenstände wie zum Beispiel sehr kleiner Bilder, Photos, Postkarten, Poster, Zeichnungen, Dekorationen etc. im Wohn-, Arbeits- und Bürobereich. Selbstklebefilme werden hierbei oft alternativ zu Stecknadeln, Reißzwecken und Pin-Nadeln eingesetzt. Vorteile von Selbstklebebändern im Vergleich zu letztgenannten Befestigungsmitteln sind unter anderem ihre einfache und ungefährliche Handhabung (keine Verletzungsgefahr), ihre weitestgehende Unsichtbarkeit (durch die hohe Transparenz der Selbstklebefilme), die Möglichkeit, eine Fixierung auch auf festen, mit Nadeln nicht zu durchstechenden Oberflächen vornehmen zu können sowie die Möglichkeit, eine einmal vorgenommene Verklebung von ausreichend festen Untergründen durch Abschälen des Klebefilmes rückstands- und zerstörungsfrei wiederabzulösen. Das schälende Ablösen von Selbstklebefilmen ist hierbei eine auch dem Laien typischerweise bekannte Handlung. Nachteile einer Fixierung mit Selbstklebefilmen ist, dass sich selbige von wenig festen Haftgründen wie zum Beispiel Tapeten, Papier, Pappe, gestrichenen Wänden etc. häufig nicht ohne wenigstens teilweise Zerstörung des Haftgrundes wiederablösen lassen.

Zahlreiche Haftklebstoffsysteme und Selbstklebebänder wurden speziell entwickelt, um Verklebungen auch von zum Teil weniger festen Untergründen rückstands- und zerstörungsfrei wiederablösen zu können. Eine Entwicklungsrichtung verfolgt hierbei die Herstellung reversibel abschälbarer ein- oder beidseitig haftklebriger Selbstklebebänder. Typische Beispiele für entsprechende Produkte nutzen unter anderem:

   1. Haftklebstoffe auf Basis von Acrylatcopolymeren, welche mittels Suspensionspolymerisation (Perlpolymerisation) hergestellt werden. Beispielhafte Ausführungsformen sind in der WO 96/18701 A1 "Removable Pressure Sensitive Adhesive and Article" und der hierin zitierten Literatur beschrieben. Typische marktgängige Produkte beinhalten "GELTAC Microsphere Adhesive Tabs" der Firma "PCI, Syracuse, NY (USA) und "Postertape" der Firma verkerke (Niederlande).

   2. Selbstklebebänder, welche partiell mit Haftklebstoffen beschichtet sind und welche unter anderem durch die Art der partiellen Beschichtung reversibel abschälbare Eigenschaften erhalten. Beispielhafte Ausführungsformen siehe in der EP 0 149 135 A1 "Rückstandsfrei wiederablösbare haftklebrige Flächengebilde" und EP 0 328 925 A1 "Haftklebrige Flächengebilde".

   3. Haftklebstoffe auf Basis von Polyurethanen. Marktgängige Produkte beinhalten "Doppio" der Firma Oxford (GB), "Mount No. 30" der Firma Cemedine oder Tree's Klebe Pins der Firma Plus AG.
   Wiederablösbare, wiederverwendbare Haftklebstoffe auf Basis von Polyurethan werden zum Beispiel in US 6,040,028 A oder US 5,102,714 A beschrieben. Doppelseitige Klebebänder mit einem unelastischen Träger, die einen oder mehrere wiederablösbare, abwaschbare, wiederverwendbare Haftklebstoffe auf Basis Polyurethan enthalten, sind zum Beispiel aus JP 08 188 755 A1 oder aus JP 06 279 741 A1 bekannt.

   4. Andere Haftklebstoffsysteme, zum Beispiel solche auf Basis von in Lösung polymerisierten Acrylatcopolymeren, Naturkautschuk-Harz Gemischen, EthylenVinylacetat Copolymeren, um nur einige zu nennen, die in ihrem klebtechnischen Eigenschaftsprofil so gesteuert werden, dass die Herstellung von Klebebändern mit sehr niedrigen Schälkräften möglich ist. Marktgängige Produkte umfassen unter anderem "Scotch Haftstücke transparent" der Minnesota Mining and Manufacturing Co. Inc. und "Pritt on&off" der Firma Henkel.

   5. Haftklebrige plastisch verformbare Produkte, welche sich ähnlich wie Knetmasse portionieren und formen lassen und wie sie zum Beispiel unter den Markennamen "Blu-Tac" (Bostik), "UHU tac patafix" (Uhu GmbH) oder "Pritt Buddies" (Henkel) bekannt sind.

Auf Basis vorgenannter Haftklebstoffsysteme lassen sich ein- oder beidseitig haftklebrige Selbstklebeprodukte erzeugen, welche sich infolge ihrer geringen Schälkräfte auch von zum Teil weniger festen Untergründen durch Abschälen auf einfache Weise rückstandsund zerstörungsfrei wiederablösen lassen. Durch Einsatz beidseitig haftklebriger Selbstklebebänder lassen sich auf gleiche Weise flexible Substrate wie zum Beispiel Poster, Papiere, Kunststoff-Folien etc. auch von zum Teil weniger festen Untergründen rückstands- und zerstörungsfrei wiederablösen.

Vorgenannte Selbstklebeartikel weisen jedoch zahlreiche Nachteile auf:

- In allen Fällen, in denen eine rückstands- und beschädigungsfreie Wiederablösung der Selbstklebeprodukte von wenig festen Untergründen wie zum Beispiel Tapete, Papier, Pappe, gestrichene Wände etc. durch Abschälung möglich ist, können nur extrem niedrige Verklebungsfestigkeiten realisiert werden. Hierbei ist zu berücksichtigen, dass die beim Ablösen von Selbstklebebändern auf den Verklebungsuntergrund ausgeübten Kräfte entlang einer sehr schmalen Linie übertragen werden und damit auch bei niedrigen Schälkräften beträchtliche Schälspannungen (Normalspannungen) auf den Verklebungsuntergrund einwirken können, die zumindest eine teilweise Beschädigung wenig fester Untergründe entlang dieser schmalen Linie hervorrufen können.

- Bei Fixierung zweier starrer Verklebungspartner ist durch deren mangelnde Flexibilität ein rückstands- und zerstörungsfreies Wiederablösen durch Abschälen unmöglich. Beim Versuch des Lösens der Verklebung durch Spalten der Klebbindung treten typischerweise derart hohe (orthogonal auf die Verklebungspartner einwirkende) Spaltkräfte (Normalkräfte) auf, dass eine wenigstens teilweise Zerstörung eines der Verklebungspartners in vielen Fällen nicht ausgeschlossen werden kann.

- Typischerweise zeigen oben genannte Produkte einen zeitlichen Anstieg der für ihr Wiederablösen benötigte Schälkraft. So beobachtet man zum Beispiel für Pritt on&off (Firma Henkel) und "GELTAC Microsphere Adhesive Tabs" der Firma PCI, Syracuse, NY (USA), dass frisch verklebte Posterpapiere von gestrichener Raufasertapete rückstands- und zerstörungsfrei wiederabgelöst werden können. Sind die Poster jedoch einige Wochen auf dem gleichen Tapetenuntergrund verklebt, was einer typischen Anwendungsdauer entspricht, so werden durch die jetzt merklich höheren Schälkräfte sowohl die Poster als auch die Tapete beim schälenden Ablösen häufig stark beschädigt. Ein rückstands- und zerstörungsfreies Ablösen von empfindlichen Untergründen ist mithin nur eingeschränkt, in zahlreichen Fällen gar nicht möglich.

- Ein gravierender Nachteil zahlreicher der oben genannten Selbstklebeprodukte ist ihre Eigenschaft, insbesondere Papier- und Pappuntergründe zu durchfetten und damit irreversibel in ihren optischen und mechanischen Eigenschaften zu verändern. Dies ist insbesondere ärgerlich, wenn durch auftretende optische Veränderungen die Ästhetik eines zu verklebenden Gegenstandes oder die des Haftgrundes dauerhaft negativ verändert wird. Dieser Nachteil trifft insbesondere für alle bisher bekannten polyurethan-basierten Haftklebstoffe zu.

- Ein weiterer Nachteil vorgenannter schälend abzulösender, nicht abwaschbarer Selbstklebebänder ist, dass selbige typischerweise nach Verwendung oder nach zum Beispiel Verschmutzung (zum Beispiel durch Berühren der Finger oder Kontakt mit verschmutzten Oberflächen) eine merkliche Reduzierung ihrer Haftklebrigkeit aufweisen und damit typischerweise nicht ohne merklichen Leistungsverlust wiederverwendbar sind.

Durch Abschälen rückstands- und zerstörungsfrei wiederablösbare Selbstklebebänder lassen sich somit für eine Vielzahl von Fixierungen insbesondere sehr leichter und flacher Gegenstände nutzen, weisen jedoch gleichzeitig, wie soeben dargelegt, eine bedeutende Anzahl von Nachteilen auf.

Eine zweite Entwicklungsrichtung von Haftklebstoffsystemen und Selbstklebebändern für das rückstands- und zerstörungsfreie Wiederablösen von Verklebungen auch auf weniger festen Untergründen verfolgt die Herstellung von elastisch oder plastisch hochdehnbaren (stripfähigen) Selbstklebebändern, welche sich durch dehnendes Verstrecken in der Verklebungsebene rückstands- und zerstörungsfrei wiederablösen lassen.

Typische Beispiele sind unter anderem aus US 4,024,312 A, DE 33 31 016 C1, WO 92/11332 A1, WO 92/11333 A1, DE 42 22 849 A1, WO 95/06691 A1, DE 195 31 696 A1, DE 196 26 870 A1, DE 196 49 727 A1, DE 196 49 728 A1, DE 196 49 729 A1, DE 197 08 366 A1, WO 99/31193 A1, DE 198 20 858 A1 und DE 100 55 942 A1 bekannt. Eingesetzt werden sie häufig in Form von Klebebandstreifen (Klebfolienstreifen), welche bevorzugt einen nicht haftklebrigen Anfasserbereich aufweisen, von welchem aus der Ablöseprozess eingeleitet wird. Spezielle Ausführungsformen vorgenannter Selbstklebebänder sind zum Beispiel in DE 44 28 587 A1, DE 44 31 914 A1, WO 97/07172 A1, DE 196 27 400 A1, WO 98/03601 A1, DE 196 49 636 A1, DE 198 42 864 A1, DE 198 42 865 A1 und DE 199 38 693 A1 beschrieben. Vorteile von durch dehnendes Verstrecken rückstands- und zerstörungsfrei wiederablösbaren Selbstklebebändern sind, diese so auszugestalten, dass durch das beim Ablösen vorgenommene Dehnen die Haftklebrigkeit des Haftklebstoffs signifikant abfällt. Hierdurch sind die beim Ablösen auf die Verklebungspartner orthogonal zur Verklebungsoberfläche wirkenden Ablösekräfte (Normalspannungen) sehr niedrig. Dies ermöglicht es, auch Klebebänder, welche über sehr hohe Schälfestigkeiten verfügen, selbst von sehr empfindlichen Haftgründen rückstands- und zerstörungsfrei wiederabzulösen. Ein besonderer Vorteil im Vergleich zu den zuvor beschriebenen Klebebändern, welche sich durch Abschälen wiederablösen lassen, ist die Tatsache, dass auch planare Verklebungen starrer Verklebungspartner rückstands- und zerstörungsfrei wiederablösbar sind.

Die in vorgenannten Dokumenten beschriebenen, durch dehnendes Verstrecken in der Verklebungsebene wiederablösbaren Selbstklebebänder sind jedoch für die Verklebung mittelschwerer bis schwerer Gegenstände konzipiert, so dass sie hohe Verklebungsfestigkeiten und damit auch so hohe Schälfestigkeiten aufweisen müssen, dass ein reversibles Abschälen von den meisten Untergründen nicht möglich ist. Nachteilig ist weiterhin, dass das Wiederablösen durch dehnendes Verstrecken nur dann zuverlässig beschädigungsfrei funktioniert, wenn die Klebfolien im wesentlichen in Streifenform beziehungsweise in einer zumindest länglichen Form zugeschnitten sind und wenn das dehnende Verstrecken in Längsrichtung dieser Formen erfolgt. Weiterhin ist im Regelfall ein nicht haftklebriger Anfasserbereich notwendig, insbesondere wenn auf weniger festen Untergründen verklebt werden soll, auf denen ein auch nur geringfügiges Abschälen im Anfangsbereich der Verklebungsstrecke zu einer Beschädigung des Untergrundes führt.

Es zeigt sich, dass insbesondere für die Fixierung kleiner Gegenstände Klebebänder vorteilhaft wären, welche sehr niedrige Stripkräfte aufweisen, um ein leichtes und einfaches Ablösen, zum Beispiel auch für Kinderhände, zu erlauben.

Ein sehr großer Teil der im Wohn- und Bürobereich gewünschten Fixierungen betrifft, wie zuvor beschrieben, kleine und kleinste Gegenstände, wie etwa die Befestigung sehr kleiner Bilder, Postkarten, Photos, Zeichnungen sowie typischerweise an Pin-Wänden fixierte Gegenstände, für deren Befestigung klassischerweise häufig einfache Selbstklebefilme, Stecknadeln, Pin-Nadeln und Heftzwecken in ihrer Verklebungsleistung ausreichend sind. Für vorgenannte Anwendungen sind die bislang marktgängigen und in oben genannten Schriften beschriebenen, durch Verstrecken in der Verklebungsebene wiederablösbaren Selbstklebebänder somit weniger geeignet. Nachteilig sind ihre inkonveniente Handhabung sowie die Tatsache, dass sie im Regelfall nicht wiederverwendet werden können, da sie durch das dehnende Strecken entweder irreversibel plastisch verformt werden oder sich derart selbst verklebend zusammenknäueln, dass eine Entknäuelung nicht mehr möglich ist.

Es zeigt sich des weiteren, dass der Ablöseprozess durch dehnendes Verstrecken in der Verklebungsebene für zahlreiche Anwender keine derart erlernte Handlung ist, wie dies für das Lösen einer Verklebung durch Abschälen gilt. Dies erweist sich häufig als nachteilig, da in zahlreichen Fällen das Lösen der Klebbindung durch Verstrecken präzise parallel zur jeweils vorhandenen Verklebungsebene in einer Vorzugsrichtung zu erfolgen hat, um ein Reißen der Klebestreifen sowie ein rückstands- und zerstörungsfreies Lösen der Klebbindung zu gewährleisten.

Ein auch hier auftretender Nachteil vorgenannter Selbstklebebänder ist, dass selbige typischerweise nach Verwendung oder nach zum Beispiel Verschmutzung (zum Beispiel durch Berühren der Finger oder durch Kontakt mit verschmutzten Oberflächen) eine merkliche Reduzierung ihrer Haftklebrigkeit aufweisen und damit nicht ohne merklichen Leistungsverlust wiederverwendbar sind.

Ziel vorliegender Erfindung ist es somit, ein- oder beidseitig haftklebrige Folien, bevorzugt in Form von Stanzlingen oder geschnittenen Formteilen zur Verfügung zu stellen, welche für eine wiederablösbare, rückstands- und beschädigungsfreie Verklebung kleiner, leichter Gegenstände mit wenig fester Oberfläche, wie zum Beispiel einer papiernen Oberfläche, geeignet sind und die die geschilderten Nachteile des Standes der Technik nicht oder nicht in dem Maße zeigen.

Insbesondere sollen die Verklebungen auch dann rückstands- und beschädigungsfrei gelöst werden können, wenn ein Abschälen aufgrund der geometrischen Gegebenheiten im Umkreis der Verklebungsstelle nicht möglich ist, was insbesondere dann der Fall ist, wenn starre Verklebungspartner aneinander fixiert werden oder wenn die Verklebung bereits längere Zeit, zum Beispiel mehrere Monate, bestand, und damit die Schälkraft abhängig von der Art des verklebten Substrats möglicherweise im Vergleich zur Schälkraft bei einer frischen Verklebung stark angestiegen ist. Die rückstands- und beschädigungsfreie Wiederablösung soll unabhängig von der äußeren Form der haftklebrigen Folie stets leicht und in jede Richtung zu realisieren sein. Eine Wiederverwendung der haftklebrigen Folie soll in jedem Fall möglich sein, auch dann, wenn der Haftklebstoff der Folie verschmutzt wurde oder wenn die Folie zusammengeknäuelt wurde.

Gelöst wird diese Aufgabe durch eine abwaschbare, wiederverwendbare, elastische Klebefolie, wie sie im Hauptanspruch niedergelegt ist, bevorzugt in Form von Stanzlingen oder geschnittenen Formteilen, die das rückstands- und beschädigungsfreie Wiederablösen von Verklebungen sowohl durch Abschälen als auch durch dehnendes Verstrecken der Klebfolie ermöglicht oder eine beliebige Kombination beider Ablösearten zulässt, so dass die Vorzüge beider Ablösearten miteinander kombiniert werden und die sich nach dem beabsichtigten oder unbeabsichtigten Zusammenknäueln weitgehend von allein wieder auseinander faltet oder sich zumindest auseinander falten lässt. Gegenstand der Unteransprüche sind dabei vorteilhafte Weiterbildungen der Klebefolie, Verfahren zur Herstellung derselben sowie Verwendungsmöglichkeiten.

Demgemäss betrifft die Erfindung eine ein- oder beidseitig haftklebrige, mehrfach wiederverwendbare, elastische Klebfolie, bevorzugt in Form von Stanzlingen oder geschnittenen Formteilen, für das rückstands- und beschädigungsfreie Wiederablösen von Verklebungen, insbesondere auf wenig festen Untergründen wie zum Beispiel Papier, sowohl durch Abschälen als auch durch dehnendes Verstrecken der Klebfolie.

Die Klebefolie besteht dabei aus zumindest einer Lage eines Haftklebstoffes.

Die Klebfolie hat des weiteren eine maximale Dehnbarkeit von größer 200 % und ein Rückstellungsvermögen von größer 60 % nach Verstreckung auf 2/3 ihrer maximalen Dehnung.

Der Haftklebstoff der Klebfolie basiert auf einem chemisch vernetzten Polyurethan, wobei die Ausgangsstoffe des chemisch vernetzten Polyurethans mindestens einen gegenüber Isocyanaten reaktiven Stoff mit einer Funktionalität größer 2,0 enthalten, und zwar zu einem Anteil von mindestens 5 Gew.-% bezogen auf die Polyurethanzusammensetzung, wobei

- das Molekulargewicht mindestens eines der zur Bildung des Polyurethans eingesetzten Ausgangsstoffes größer oder gleich 1000 ist,
- zur Bildung des Polyurethans mindestens difunktionelle Polyisocyanate eingesetzt werden und
- das Verhältnis von maximaler Zugspannung zu Strippspannung größer 1,2, bevorzugt größer 1,5, besonders bevorzugt größer 2,0 ist und
- die Zugspannung bei einer Dehnung von 200 % maximal 2,0 N/mm$^2$, bevorzugt maximal 1,0 N/mm$^2$, besonders bevorzugt maximal 0,5 N/mm$^2$ beträgt.

In einer ersten vorteilhaften Ausführungsform setzt sich das Polyurethan der elastischen Klebfolie aus folgenden miteinander zur Reaktion gebrachten Ausgangsstoffen in den angegebenen Verhältnissen zusammen:

- mindestens einem mindestens difunktionellen Polyisocyanat,
- einer Kombination aus mindestens einem Polypropylenglykol-Diol und mindestens einem Polypropylenglykol-Triol,

wobei das Verhältnis

- der Anzahl der Hydroxylgruppen der Diol-Komponente zu der Anzahl der Hydroxylgruppen der Triol-Komponente bevorzugt zwischen 0,7 und 9,0, besonders bevorzugt zwischen 1,5 und 2,5 liegt,
- der Anzahl der Isocyanatgruppen zur Gesamtanzahl der Hydroxylgruppen zwischen 0,5 und 1,3, bevorzugt zwischen 0,8 und 1,2 besonders bevorzugt zwischen 0,95 und 1,05 liegt,

wobei

- Diole mit einem Molekulargewicht von kleiner oder gleich 1000 mit Triolen kombiniert werden, deren Molekulargewicht größer 1000, bevorzugt größer oder gleich 3000 ist, oder
- Diole mit einem Molekulargewicht von größer 1000 mit Triolen kombiniert werden, deren Molekulargewicht kleiner 1000 ist.

Auf die erfindungsgemäße und oben geschilderte Weise ist der polyurethan-basierte Haftklebstoff der erfindungsgemäßen Klebfolie derart ausgestaltet, dass eine Wanderung migrierfähiger Bestandteile dieses Haftklebstoffs in die Verklebungsuntergründe (zum Beispiel Papier) so gering ist, dass es nicht oder nur zu einer vernachlässigbar geringen "Durchfettung" derselben kommt.

Weiter vorzugsweise hat die Klebfolie eine maximale Dehnbarkeit größer 300 %, bevorzugt größer 400 % und/oder ein Rückstellungsvermögen von größer 80 %, bevorzugt größer 90 % nach Verstreckung auf 2/3 ihrer maximalen Dehnung.

Erfindungsgemäße elastische Klebefolien sind demgemäss ein- oder beidseitig haftklebrig, wobei der Haftklebstoff stets auf Basis eines chemisch vernetzten Polyurethans gebildet wird.

In einer besonderen Ausführungsform weist die erfindungsgemäße elastische Klebefolie einseitig eine Trägerfolie auf, auf die der Haftklebstoff aufgebracht ist.

In weiteren Ausführungsformen ist die erfindungsgemäße elastische Klebefolie ein Zweioder Mehrschichtlaminat, bestehend aus einer oder mehreren elastischen Trägerfolien und einem oder mehreren polyurethan-basierten Haftklebstoffen.

Um die Verankerung zwischen den einzelnen Schichten zu verbessern, können alle bekannten Methoden der Oberflächenvorbehandlung, wie beispielsweise Corona-Vorbehandlung, Beflammung, Gasphasenbehandlung (zum Beispiel Fluorierung) eingesetzt werden. Ebenso können alle bekannten Methoden der Primerung eingesetzt werden, wobei die Primerschicht sowohl aus Lösungen oder Dispersionen heraus aufgetragen werden kann als auch im Extrusions- oder Coextrusionsverfahren.

Nicht haftklebrige Oberflächen der Klebefolie können außer durch Verwendung nichtklebriger, elastischer Trägerfolien auf vielfältige Art und Weise erhalten werden. Beispiele umfassen den Einsatz einer flexiblen, nichtelastischen Folienabdeckung, jedoch sind auch unterschiedliche Formen der Lackierung oder auch eine Inertisierung mittels zum Beispiel pulverförmiger Materialien erfindungsgemäß nutzbar. Es sind nur wenige ausgewählte Möglichkeiten genannt, die den Erfindungsgegenstand ink einster Weise beschränken sollen. Dem Fachmann fallen ohne weiteres Nachdenken vergleichbare Lösungsmöglichkeiten ein.

Neben Klebebändern, welche einen Zweischichtaufbau nutzen, bestehend aus einem haftklebrigen Polyurethan und einer geeigneten nicht selbstklebrigen und somit inerten Schicht, sind des weiteren vielschichtige Produktaufbauten erfindungsgemäß nutzbar, insbesondere solche enthaltend mehrere polyurethanbasierende Schichten, oder Produkte nutzend weitere elastische Schichten auf Basis von zum Beispiel Acrylatcopolymeren, Kautschuken usw.

Beidseitig haftklebrige Klebefolien können von mehrschichtigem Produktaufbau sein, wobei der Haftklebstoff beispielsweise beidseitig auf einem Zwischenträger aus Folie aufgetragen wird.

Erfindungsgemäß nutzbar sind des weiteren Klebefolien, die an einem oder an mehreren Enden oder auch gemäß DE 196 49 636 A1 partiell nicht haftklebrig ausgeführt ist, so dass ein oder mehrere Anfasserbereiche vorliegen, von welchen aus das Lösen der Klebbindung vorteilhaft vorgenommen werden kann.

Die äußere Form erfindungsgemäßer Klebefolien ist breit einstellbar. Erfindungsgemäß nutzbar sind insbesondere Klebefolien, welche an einem oder mehreren Enden entsprechend DE 44 28 587 C2, DE 198 42 865 A1 oder DE 199 38 693 A1 ausgeformt sind oder solche mit Formen entsprechend DE 196 49 636 A1. Auf die in den Schriften genannten Ausführungsbeispiele wird hiermit ausdrücklich Bezug genommen wird und diese werden Teil der Offenbarung dieser Erfindung.

Erfindungsgemäß einsetzbare Haftklebstoffe auf Basis von Polyurethan werden durch chemische Umsetzung von mindestens einem mindestens difunktionellen Polyisocyanat mit einem oder mehreren gegenüber Isocyanaten reaktiven Stoffen, bevorzugt Polyolen, gebildet, wobei diese Stoffe mit einem Anteil von mindestens 5 Gew.-% bezogen auf die Polyurethanzusammensetzung einen Stoff mit einer Funktionalität größer 2,0 enthalten, wobei das Molekulargewicht mindestens eines der zur Bildung des Polyurethans eingesetzten Stoffe größer oder gleich 1000 ist und wobei die Stärke der Haftklebrigkeit so auf das Zugdehnungsverhalten der elastischen Folie abgestimmt ist, dass das Verhältnis von maximaler Zugspannung zu Stripspannung der erfindungsgemäßen Klebfolie größer 1,2, bevorzugt größer 1,5, besonders bevorzugt größer 2,0 ist.

Bevorzugt geeignet sind Haftklebstoffe auf Basis von Polyurethan gemäß obiger Beschreibung, in denen der Haftklebstoff derart ausgestaltet ist, dass eine Wanderung migrierfähiger Bestandteile dieses Haftklebstoffs in die Verklebungsuntergründe (zum Beispiel Papier) so gering ist, dass es nicht oder nur zu einer vernachlässigbar geringen "Durchfettung" derselben kommt. Derartige Polyurethane setzen sich aus folgenden miteinander zur Reaktion gebrachten Ausgangsstoffen in den angegebenen Verhältnissen zusammen:

- mindestens einem mindestens difunktionellen Polyisocyanat, bevorzugt mindestens einem aliphatischen oder alicyclischen Diisocyanat, besonders bevorzugt mindestens einem aliphatischen oder alicyclischen Diisocyanat mit unsymmetrischer Molekülstruktur,
- einer Kombination aus mindestens einem Polypropylenglykol-Diol und mindestens einem Polypropylenglykol-Triol, wobei

  - das Verhältnis der Anzahl der Hydroxylgruppen der Diol-Komponente zu der Anzahl der Hydroxylgruppen der Triol-Komponente bevorzugt zwischen 0,7 und 9,0, besonders bevorzugt zwischen 1,5 und 2,5 liegt,
  - weiterhin das Verhältnis der Anzahl der Isocyanatgruppen zur Gesamtanzahl der Hydroxylgruppen zwischen 0,5 und 1,3, bevorzugt zwischen 0,8 und 1,2 besonders bevorzugt zwischen 0,95 und 1,05 liegt,
  - Diole mit einem Molekulargewicht von kleiner oder gleich 1000 mit Triolen kombiniert werden, deren Molekulargewicht größer 1000, bevorzugt größer oder gleich 3000 ist, oder Diole mit einem Molekulargewicht von größer 1000 mit Triolen kombiniert werden, deren Molekulargewicht kleiner 1000 ist.

Besonders bevorzugt ist, wenn das Polyisocyanat ein aliphatisches oder alicyclisches Diisocyanat ist, besonders bevorzugt ein aliphatisches oder alicyclisches Diisocyanat mit unsymmetrischer Molekülstruktur. Ganz besonders bevorzugt handelt es bei dem Isocyanat um Isophorondiisocyanat.

Als Polyisocyanate können erfindungsgemäß alle bekannten mindestens difunktionellen Polyisocyanate verwendet werden. Darunter fallen sowohl alle aromatischen Typen, wie zum Beispiel die Isomeren des Diphenylmethandiisocyanats (MDI), des Diphenyldimethylmethandiisocyanats, des Dibenzyldiisocyanats, des Phenylendiisocyanats, des Toluylendiisocyanats (TDI) oder des Naphthylendiisocyanats, als auch alle aliphatischen oder alicyclischen Typen, wie zum Beispiel Butan-1,4-diisocyanat, Tetramethoxybutan-1,4-diisocyanat, Hexan-1,6-diisocyanat, Ethylendiisocyanat, Dicyclohexylmethandiisocyanat, 1,4-Diisocyanatocyclohexan, 1,3-Diisocyanatocyclohexan, 1,2-Diisocyanatocyclohexan, 1,3-Diisocyanatocyclopentan, 1,2-Diisocyanatocyclopentan, 1,2-Diisocyanatocyclobutan, Norbonandiisocyanatomethyl, chlorierte, bromierte, schwefel- oder phosphorhaltige aromatische, aliphatische oder alicyclische Diisocyanate, sowie Derivate der aufgeführten Diisocyanate, insbesondere dimerisierte oder trimerisierte Typen, des weiteren Aromaten enthaltende Typen, in denen die Isocyanatgruppen selbst nicht aromatisch gebunden sind, wie zum Beispiel die Isomeren des Tetramethylxylylendiisocyanats (TMXDI) oder des Xylylendiisocyanats.

Überraschend wurde gefunden, dass aliphatische oder alicyclische Diisocyanate mit jeweils unsymmetrischer Molekülstruktur, in denen also die beiden Isocyanatgruppen jeweils eine unterschiedliche Reaktivität besitzen, besonders geeignet sind, um haftklebrige Polyurethane zu erzeugen, bei denen insbesondere die sonst für haftklebrige Polyurethane typische Neigung, auf Papier oder Pappe fettig aussehende Flecken zu hinterlassen, deutlich reduziert ist. Unsymmetrische Molekülstruktur bedeutet, dass das Molekül keine Symmetrieelemente (zum Beispiel Spiegelebenen, Symmetrieachsen, Symmetriezentren) besitzt, dass also keine Symmetrieoperation ausgeführt werden kann, die ein mit dem Ausgangsmolekül deckungsgleiches Molekül erzeugt.

Beispiele geeigneter Diisocyanate mit unsymmetrischer Molekülstruktur sind 2,2,4-Trimethyl-hexamethylendiisocyanat, Ethylethylendiisocyanat, 1-Isocyanatomethyl-3-isocyanato-1,5,5-trimethylcyclohexan (Isophorondiisocyanat, IPDI), 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan oder 2-Heptyl-3,4-bis(9-isocyanatononyl)-1-pentyl-cyclohexan.

Als gegenüber Isocyanaten reaktive Stoffe können alle für die Herstellung von Polyurethan-Haftklebstoffen bekannten Stoffe eingesetzt werden, unter anderem Polyole, wobei diese Stoffe mit einem Anteil von mindestens 5 Gew.-% bezogen auf die Polyurethanzusammensetzung mindestens einen Stoff mit einer Funktionalität größer 2,0 enthalten und wobei das Molekulargewicht mindestens eines der zur Bildung des Polyurethans eingesetzten Stoffe größer oder gleich 1000 ist. Die Auswahl der Stoffe richtet sich nach dem einzustellenden Eigenschaftsprofil der elastischen Klebefolie, insbesondere nach dem einzustellenden Verhältnis von Höchstzugfestigkeit zu Strippspannung.

In Frage kommen beispielsweise alle Polyether-Polyole, wie zum Beispiel Polyethylenglykole, Polypropylenglykole, Polytetramethylenglykolether (Polytetrahydrofurane), Polyester-Polyole, Polycaprolactone, Polycarbonate, hydroxyl-funktionalisierte Polybutadiene oder andere Kohlenstoff-Kohlenstoff-Doppelbindungen enthaltende Polyole, hydrierte Typen letztgenannter Beispiele, zum Beispiel hydrierte hydroxyl-funktionalisierte Polyisoprene, hydroxyl-funktionalisierte Polyisobutylene oder hydroxyl-funktionalisierte Polyolefine.

Weiterhin kommen auch alle Amino-Gruppen tragenden, in der Polyurethan-Chemie üblichen Polyether in Frage, da die daraus resultierenden Polyharnstoffe in der Polyurethan-Praxis zu den Polyurethanen hinzugerechnet werden (vgl. Kunststoff-Handbuch, Bd. 7, Polyurethane). Alle aufgezählten Stoffe können sowohl mit der Funktionalität 1,0 (Monoole), 2,0 (Diole), 3,0 (Triole), mit einer zwischen diesen Werten liegenden Funktionalität oder mit einer beliebigen anderen Funktionalität oder im Gemisch verwendet werden.

Neben den oben aufgezählten Isocyanat-Komponenten und den damit reagierenden Komponenten können aber auch andere Edukte zur Bildung des Polyurethans verwendet werden, ohne den Erfindungsgedanken zu verlassen.

Als Polypropylenglykole können alle handelsüblichen Polyether auf Basis von Propylenoxid und eines difunktionellen Starters im Falle der Diole und eines trifunktionellen Starters im Falle der Triole eingesetzt werden. Darunter fallen sowohl die konventionell, d.h. im Regelfall mit einem basischen Katalysator, wie zum Beispiel Kaliumhydroxid, hergestellten Polypropylenglykole, als auch die besonders reinen Polypropylenglykole, die DMC (Double metal cyanide)-katalysiert hergestellt werden, und deren Herstellung zum Beispiel in US 5,712,216 A, US 5,693,584 A, WO 99/56874 A1, WO 99/51661 A1, WO 99/59719 A1, WO 99/64152 A1, US 5,952,261 A, WO 99/64493 A1 und WO 99/51657 A1 beschrieben wird. Charakteristisch an den DMC-katalysierten Polypropylenglykolen ist, dass die "nominate" beziehungsweise theoretische Funktionalität von exakt 2,0 im Falle der Diole beziehungsweise exakt 3,0 im Falle der Triole auch tatsächlich annähernd erreicht wird. Bei den konventionell hergestellten Polypropylenglykolen ist die "wahre" Funktionalität stets etwas geringer als die nominale, und zwar insbesondere bei Polypropylenglykolen mit höherem Molekulargewicht. Ursache ist unter anderem eine Umlagerungs-Nebenreaktion des Propylenoxids zum Allylalkohol.

Weiterhin können auch alle Polypropylenglykol-Diole beziehungsweise -Triole eingesetzt werden, in denen Ethylenoxid mit einpolymerisiert ist, was in vielen handelsüblichen Polypropylenglykolen der Fall ist, um eine erhöhte Reaktivität gegenüber Isocyanaten zu erzielen.

Durch Variation des Verhältnisses der Anzahl der Hydroxylgruppen des Diols zu der des Triols kann die Klebkraft anwendungsgerecht eingestellt werden. Überraschend wurde gefunden, dass die Klebkraft zunimmt, je höher das Verhältnis der Anzahl der Diol-OH-Gruppen zu der der Triol-OH-Gruppen ist.

Die Klebkraft kann weiterhin über das Verhältnis der Anzahl der Isocyanatgruppen zur Gesamtanzahl der Hydroxylgruppen eingestellt werden. Tendenziell nimmt die Klebkraft zu, je stärker dieses Verhältnis von 1 zu kleineren Werten hin abweicht.

In einer möglichen Ausführungsform enthält der polyurethan-basierte Haftklebstoff weitere Rezeptierungsbestandteile wie zum Beispiel Katalysatoren, Alterungsschutzmittel (primäre und sekundäre Antioxidantien), Lichtschutzmittel wie zum Beispiel UV-Absorber, rheologische Additive, Farbpigmente, Farbstoffe, sowie sonstige Hilfs- und Zusatzstoffe.

Bei der Auswahl dieser Stoffe ist im Hinblick auf das "Durchfettungsphänomen" darauf zu achten, dass diese Stoffe keine Migrationstendenz zum zu verklebenden Substrat hin haben, damit es nicht auf diese Weise zur Fleckenbildung oder auch zu Verfärbungen kommt. Aus dem gleichen Grund ist die Konzentration dieser Stoffe, insbesondere der flüssigen, in der Gesamtzusammensetzung möglichst niedrig zu halten. Die zusätzliche Verwendung von Weichmachern oder Klebrigmacherharzen sollte aus diesem Grund reduziert werden, ohne dass diese Stoffe damit gänzlich ausgeschlossen werden sollen.

Um die Reaktion zwischen der Isocyanat-Komponente und der mit dem Isocyanat reagierenden Komponente zu beschleunigen, können alle dem Fachmann bekannten Katalysatoren wie zum Beispiel tertiäre Amine, bismut- oder zinnorganische Verbindungen eingesetzt werden, um nur einige zu nennen.

Die Verwendung von Antioxidantien ist vorteilhaft, aber nicht zwingend notwendig.
Zu den geeigneten Antioxidantien zählen zum Beispiel sterisch gehinderte Phenole, Hydrochinon-Derivate, sterisch gehinderte Amine, organische Schwefelverbindungen oder organische Phosphorverbindungen.

Lichtschutzmittel, zum Beispiel UV-Absorber, können optional ebenso eingesetzt werden.

Als Lichtschutzmittel finden die bei Garechter und Müller, Taschenbuch der Kunststoff-Additive, München 1979, bei Kirk-Othmer (3.) $\underline{23}$, 615 bis 627, bei Encycl. Polym. Sci. Technol. $\underline{14}$, 125 bis 148 und bei Ullmann (4.) $\underline{8}$, 21; $\underline{15}$, 529, 676 offenbarten Verwendung.

Beispiele für rheologische Additive sind pyrogene Kieselsäuren, Schichtsilikate (zum Beispiel Bentonite), hochmolekulare Polyamidpulver oder Rizinusölderivat-Pulver.

Zur Einfärbung des Haftklebstoffs kommen alle bekannten, in der Polyurethanchemie einsetzbaren Farbpigmente beziehungsweise Farbstoffe in Frage, insbesondere auch solche, die transparente oder transluzente Farbeffekte hervorbringen.

Der Haftklebstoff wird in einer bevorzugten Ausführungsform nach dem im folgenden beschriebenen Verfahren kontinuierlich hergestellt:

Es werden in einem Behälter A im wesentlichen die vorgemischten, gegenüber Isocyanat reaktiven Stoffe (Polyol-Komponente) und in einem Behälter B im wesentlichen die Isocyanat-Komponente vorgelegt, wobei gegebenenfalls die weiteren Rezeptierungsbestandteile diesen Komponenten bereits zuvor in einem üblichen Mischverfahren zugemischt wurden.
Die Polyol- und die Isocyanat-Komponente werden über Präzisionspumpen durch den Mischkopf oder das Mischrohr einer Mehrkomponenten-Misch- und Dosieranlage gefördert, dort homogen vermischt und somit zur Reaktion gebracht. Die somit gemischten, miteinander chemisch reagierenden Komponenten werden unmittelbar danach auf ein bahnförmiges Trägermaterial aufgebracht, das sich bevorzugt mit konstanter Geschwindigkeit bewegt.

Die Art des bahnförmigen Trägermaterials richtet sich nach dem genauen Produktaufbau der elastischen Klebefolie. Es kann beispielsweise, insbesondere für den Fall eines einschichtigen Produktaufbaus, ein antiadhäsiv ausgerüstetes, im wesentlichen unelastisches bahnförmiges Material sein, welches als Abdeckfolie für die erfindungsgemäße elastische Klebefolie dient, es kann die elastische Trägerfolie und damit Bestandteil des eigentlichen Produktaufbaus sein, oder es kann, insbesondere für den Fall einer beidseitig haftklebrigen elastischen Klebefolie, eine bereits einseitig mit einem Polyurethan-Haftklebstoff vorbeschichtete elastische Trägerfolie sein, ohne die Erfindung mit diesen Beispielen einschränken zu wollen.

Das mit der reagierenden Polyurethanmasse beschichtete Trägermaterial wird durch einen Wärmekanal geführt, in dem die Polyurethanmasse zum Haftklebstoff aushärtet.

Das Auftragsgewicht der Polyurethanmasse ist frei wählbar. Es richtet sich nach den im Detail einzustellenden Produkteigenschaften, wobei die oben aufgeführten, typischen Produktdicken bevorzugt einzuhalten sind. Das beschichtete Trägermaterial wird abschließend in einer Wickelstation aufgewickelt.

Das beschriebene Verfahren ermöglicht es, lösemittel- und wasserfrei zu arbeiten. Das lösemittel- und wasserfreie Arbeiten ist die bevorzugte Verfahrensweise, ist a ber nicht zwingend notwendig. Um zum Beispiel besonders geringe Auftragsgewichte zu erzielen, können die Komponenteningeeigneter Weise verdünnt werden. Um die Verankerung der Polyurethanmasse auf der elastischen Trägerfolie zu verbessern, können alle bekannten Methoden der Oberflächenvorbehandlung, wie beispielsweise Corona-Vorbehandlung, Beflammung, Gasphasenbehandlung (zum Beispiel Fluorierung) eingesetzt werden. Ebenso können alle bekannten Methoden der Primerung eingesetzt werden, wobei die Primerschicht sowohl aus Lösungen oder Dispersionen heraus aufgetragen werden kann als auch im Extrusions- oder Coextrusionsverfahren.

Um die Abrolleigenschaften der gewickelten Rolle bei einer einseitig haftklebrigen elastischen Folie zu verbessern, kann die Rückseite der elastischen Trägerfolie mit einem Trennlack (Releaselack) vorbeschichtet werden oder aber eine trennende co- oder aufextrudierte Rückseitenbeschichtung tragen.

Erfindungsgemäße Klebefolien können Trägerfolien beinhalten, welche eine oder mehrere dehnfähige Folienschichten, beispielsweise entsprechend EP 0 761 793 B1, enthalten.
Bevorzugte Elastomere sind Styrolblockcopolymere, Naturkautschuk, Polyisopren, Polybutadien, Polychloropren-Kautschuk, Butylkautschuk, Silikonkautschuk, EPDM-Kautschuk oder Ethylen-Propylen-Copolymere, Polyurethane (wie z um Beispiel A-3600 (Wolff Walsrode), Platilon UO 1 (Atochem), Desmopan (Bayer), Elastollan (Elastogran)), Vinyl-Copolymere, Ethylen-Vinylacetat-Copolymere, Vinylchlorid-Acrylat-Copolymere, Polyetherester (zum Beispiel Arnitel (Akzo), Hytrel (Du Pont)), Polyether- und -esteramide (zum Beispiel Pebax (Atochem), Grilon (Ems-Chemie)), Polycarbonat-Polyester-Copolymere, Ethylen-Acrylat-Copolymere, Acrylat-Copolymere oder ABS-Copolymere. Weiterhin können die vorgenannten Elastomere auch als Bestandteil in Polymerblends eingesetzt werden. Zur Einstellung der mechanischen Eigenschaften kann eine Vernetzung vorgenannter Materialien vorteilhaft sein.

Erfindungsgemäße Klebefolien bestehen vorzugsweise aus elastischen Trägerfolien auf Basis von Polyurethan, welche zusätzlich haftklebrige Eigenschaften haben.

Weiterhin können die Trägerfolien weitere Rezeptierungsbestandteile, wie zum Beispiel Alterungsschutzmittel (Antioxidantien), Lichtschutzmittel, UV-Absorber, Farbpigmente, Farbstoffe, Füllstoffe sowie sonstige Hilfs- und Zusatzstoffe enthalten.

Die Trägerfolien oder einzelne Schichten der Trägerfolien können weiterhin mit einem Gas geschäumt sein oder durch Zugabe von expandierfähigen oder bereits expandierten Mikroballons, Mikroglashohl- und -vollkugeln eine Volumenveränderung erfahren haben.

Die Dicke der Klebefolie, insbesondere wenn die Klebefolie aus einer Schicht eines Haftklebstoffes gebildet wird, liegt typischerweise zwischen 50 µm bis 3000 µm, bevorzugt 100 µm bis 2000 µm, besonders bevorzugt 500 µm bis 1500 µm.

Erfindungsgemäße Klebefolien weisen Schälfestigkeiten (Klebkräfte) auf Stahl, ermittelt bei einem Abzugswinkel von 90°, zwischen 0.05 und 8 N/cm, bevorzugt zwischen 0,3 und 5 N/cm, besonders bevorzugt zwischen 0,5 und 3 N/cm auf.

Als vorteilhaft beim schälenden Ablösen erfindungsgemäßer einseitig haftklebriger Klebefolien erweist sich, dass die ermittelten Schälfestigkeiten im Vergleich zu gleich dicken analogen Klebefolien, welche zusätzlich einen dimensionsstabilen Träger, zum Beispiel einen Folienträger auf Basis von biaxial orientiertem Polyeth+lenterephthalat, beinhalten, merklich niedriger ausfallen. Die Ursache für dieses vorteilhafte Verhalten mag in einer Dehnung der Klebefolie beim Ablösen liegen.

Die beim Ablösen durch dehnendes Verstrecken in der Verklebungsebene gemessenen Strippspannungen liegen bei weniger als 2,5 N/mm$^2$, bevorzugt bei weniger als 1,5 N/mm$^2$, besonders bevorzugt bei weniger als 1,0 N/mm$^2$, wobei das Verhältnis von maximaler Zugspannung zu Strippspannung größer 1,2, bevorzugt größer 1,5, besonders bevorzugt größer 2,0 ist. Im Vergleich zu Haftklebstoffen, wie sie die EP 0 761 793 B1 nutzt, weisen die erfindungsgemäß nutzbaren Klebefolien typischerweise einen signifikanten Klebkraft-Abfall bei Verstreckung auf, wahrscheinlich eine Ursache für das beobachtete sehr gutes Ablösevermögen.

Erfindungsgemäße Klebefolien weisen maximale Zugspannungen zwischen 0,1 und 20 MPa, bevorzugt zwischen 0,2 und 10 MPa, besonders bevorzugt zwischen 0,5 und 5,0 MPa auf. Die maximale Dehnbarkeit beträgt größer 200 %, bevorzugt größer 300 %, besonders bevorzugt größer 400 %. Die Zugspannungen bei 200 % Dehnung betragen maximal 2,0 N/mm$^2$, bevorzugt maximal 1,0 N/mm$^2$, besonders bevorzugt maximal 0,5 N/mm$^2$.

Erfindungsgemäße Klebefolien sind mehrfach wiederverwendbar, ohne dass die Haftklebeeigenschaften signifikant reduziert sind. Nach Reinigung mit Wasser und anschließender Trocknung weisen Klebefolien entsprechend bevorzugter Ausführungsform auch nach deutlicher Verschmutzung mit zum Beispiel festen partikelartigen Materialien Klebkräfte auf, welche bei > 65 % der Ausgangsklebkraft, bevorzugt bei > 70 % der Ausgangsklebkraft, besonders bevorzugt bei > 80 % der Ausgangsklebkraft liegen.

Nach dem Zusammenknäueln erfindungsgemäßer Klebefolien falten sich diese weitgehend von allein wieder auseinander, insbesondere wenn diese in der bevorzugten Form von Stanzlingen oder geschnittenen Formteilen vorliegen. Größere Folienstücke lassen sich relativ leicht von Hand wieder auseinander falten. Die Ursache für dieses vorteilhafte Verhalten mag in der Charakteristik vernetzter Polyurethan-Haftklebstoffe liegen, mit sich selbst nicht zu verblocken, also von sich selbst leicht wiederablösbar zu sein, verbunden mit der inneren Spannung der elastischen Trägerfolie.

In einer weiteren bevorzugten Ausführungsform ist der Haftklebstoff erfindungsgemäßer Klebefolien derart ausgestaltet, dass eine Wanderung migrierfähiger Klebmassebestandteile in die Verklebungsuntergründe so gering ist, dass es nicht oder nur zu einer vernachlässigbar geringen "Durchfettung" derselben kommt. Die Prüfung erfolgt durch Verklebung auf verschieden alltäglichen Papiersorten (Zeitungspapier, Zeitschriftenpapier, Schreibpapier, Posterpapier), Ablösung nach einigen Wochen und anschließende visuelle Beurteilung.

Besonders vorteilhaft lässt die erfindungsgemäße Haftklebefolie zur Befestigung von Notizzetteln, Papierblättern, Kalenderblättern, Streifen, Karten oder Schachteln aus Pappe, Kartonmaterial oder Kunststoff, kleinen Gebrauchsgegenstände aus Kunststoff, Holz, Glas, Stein oder Metall verwenden.

Die folgenden Prüfmethoden wurden eingesetzt, um die nach den beschriebenen Verfahren hergestellten Muster kurz zu charakterisieren.

- Schälfestigkeit, Klebkraft (90° Abzugswinkel)

Die Prüfung der Schälfestigkeit (Klebkraft) erfolgt in Anlehnung an PSTC-101. Nach dieser Methode wird die erfindungsgemäße elastische Klebefolie in Streifenform mit einer Breite von 10 mm und einer Klebstreifenlänge von 50 mm auf unterschiedlichen Haftgründen (Stahl, PETP, PVC, Papier (handelsübliches Papier für Kopiergeräte)) aufgebracht und anschließend unter definierten Bedingungen mittels einer Zugprüfmaschine abgezogen. Der Abzugswinkel beträgt jeweils 90°, die Separationsgeschwindigkeit 300 mm/min.

Angegeben wird der Mittelwert der Schälkraft im Bereich in welchem der Klebestreifen zwischen 10 mm und 40 mm vom Haftgrund abgelöst ist. Die zum Abziehen erforderliche Kraft ist die Schälfestigkeit beziehungsweise Klebkraft, welche in der Einheit N/cm angegeben wird. In Abhängigkeit von Typ und Dicke der untersuchten Klebestreifen, dehnen sich selbige mehr oder weniger beim Abschälen. Für Vergleichszwecke wurden auch Klebstreifen untersucht, welche durch eine steife Rückseitenverstärkung (mit einer 25 μm dicken Polyesterfolie) unelastisch eingestellt wurden.

- Strippspannung (Spannung beim Ablösen durch dehnendes Verstrecken in der Verklebungsebene)

Zur Bestimmung der Strippspannung beim Ablösen der Klebeverbindung durch dehnendes Verstrecken wird die zu prüfende elastische Haftklebstoff-Folie der Abmessung 20 mm x 50 mm, welche beidseitig mit einem nicht haftklebrigen Anfasserbereich versehen ist (erhalten durch Aufkaschieren von 25 μm starker biaxial verstreckter Polyesterfolie der Abmessungen 10 mm x 13 mm (Hostaphan RN 25)), auf eine hochglanzpolierte Stahlplatte verklebt. Eine zweite Stahlplatte wird deckungsgleich zur ersten Stahlplatte auf das Stripprodukt gelegt und anschließend mittels einer 2 kg schweren Stahlrolle verpresst. Die so präparierten Prüflinge werden in dem entsprechenden Klima 3 Tage gelagert (23 °C, 50 % rel. Feuchte [RT]).

Entsprechend der Prüfmusterdicke wird ein Blatt der Fühlerlehre zwischen die Stahlplatten geschoben, so dass durch die Klemmbacken der Zugprüfmaschine die Probe nicht zusammengepresst wird. Durch eine Zuggeschwindigkeit von 1000 mm/min wird das Prüfmuster am Anfasser zwischen den Stahlplatten herausgestrippt.

Es wird die Kraft pro Prüfmusterquerschnitt ermittelt.

Angegeben wird der Mittelwert der Strippspannung (in N/mm$^2$) in dem Bereich, in welchem der Klebestreifen zwischen 10 mm und 40 mm vom Stahluntergrund abgelöst ist.

Falls Schädigungen des Prüfmusters während des Stripvorganges sichtbar wurden, sind diese zusätzlich zu den Stripkräften anzugeben.

- maximale Zugspannung // maximale Dehnbarkeit (Zugdehnungsversuch)

Messungen erfolgen, wenn nicht anders vermerkt, in Anlehnung an DIN EN ISO 527-1 bis 3 mit Normprüfkörpern der Größe 5A sowie bei einer Separationsgeschwindigkeit von 300 mm/min. Die maximale Zugspannung ist die maximal gemessene Kraft beim Dehnen des Prüfmaterials, dividiert durch die Anfangsquerschnittsfläche der Probe und wird in der Einheit N/mm$^2$ angegeben. Die maximale Dehnbarkeit ist die auf die ursprüngliche Messlänge des Prüfstreifens bezogene Längenänderung bei maximaler Gewichtsbelastung und wird in der Einheit % angegeben.

- Verhältnis von maximaler Zugspannung zu Strippspannung

Das Verhältnis von maximaler Zugspannung zu Strippspannung wird durch Division der in Anlehnung an DIN EN ISO 527 (siehe oben) erhaltenen Werte und der Strippspannung (siehe oben) erhalten.

- Rückstellvermögen

Messungen erfolgen, wenn nicht anders vermerkt, in Anlehnung an DIN EN ISO 527-1 bis 3 mit Normprüfkörpern der Größe 5 A. Zur Ermittlung des Rückstellvermögens werden Klebestreifen vorgenannter Art, welche zuvor mit gut zu vermessenden Markierungen an beiden Klebestreifenenden versehen wurden, auf ca. 67 % (ca. 2/3) ihrer maximalen Dehnung (ermittelt, wie oben unter "maximale Zugspannung //maximale Dehnbarkeit" beschrieben) verstreckt, 10 Sekunden bei dieser Verstreckung belassen und sodann wieder entspannt. Das Rückstellvermögen RV, angegeben in %, errechnet sich nach:

$$RV = (LV - LR) / (LV - LO) * 100$$

mit:

RV: Rückstellvermögen in %;
L0: Abstand der auf die Klebestreifen aufgebrachten Markierungen vor Verstreckung;
LV: Abstand der auf die Klebestreifen aufgebrachten Markierungen im verstreckten Zustand;
LR: Abstand der auf die Klebestreifen aufgebrachten Markierungen ermittelt 2 Minuten nach vollständiger Entspannung.

- Wiederverwendbarkeit
  Ermittelt wird die Schälfestigkeit (siehe oben) von Klebestreifen, an welchen fünf aufeinanderfolgende Prüfungen der Strippkraft und desgleichen fünf aufeinanderfolgende Prüfungen der Schälfestigkeit durchgeführt wurden. Schälwerte, welche eine gute mehrfache Wiederverwendbarkeit anzeigen, liegen bei > 65 % des Ausgangswertes, bevorzugt bei > 80 % des Ausgangswertes.

- Wiederverwendbarkeit nach Verschmutzung
  Ermittelt wird zunächst die Schälfestigkeit (Frischwert). Nach Durchführung der Messungen werden die zu prüfenden Klebestreifen mit feinkörnigem Sand und fein gemahlener Kreide gezielt "verschmutzt". So behandelte Klebestreifen weisen typischerweise keine spürbare Haftklebrigkeit mehr auf. Nach ca. 30 Sekunden Reinigung mit fließendem kaltem Leitungswasser ist die aufgebrachte Verschmutzung typischerweise vollständig entfernt. Nach Trocknung der Klebestreifen im kalten oder warmen Luftstrom und fünfminütiger Konditionierung wird die Schälfestigkeit im Vergleich zum Frischwert gemessen. Schälwerte, welche eine gute Wiederverwendbarkeit nach Verschmutzung anzeigen, liegen bei > 65 % des Frischwertes, bevorzugt bei > 70 %, besonders bevorzugt bei > 80 %.

- Haftgrunddurchfettung
  Die Durchfettung gibt die Eigenschaft des Haftklebstoffs wieder, Papiere im verklebten Bereich durch migrierte Haftklebstoffbestandteile in der Durchsicht zu verändern, das heißt, heller (transluzenter) zu machen.
  Ein ca. 20 cm langer Filmstreifen wird so auf das Papier verklebt, dass möglichst wenig Luft eingeschlossen wird. Der Streifen wird mit einer 1 kg-Rolle (10 mal) überrollt. Die Muster werden bei 40 °C gelagert.
  Beurteilt wird nach 1 Woche, 2 Wochen, 4 Wochen, 2 Monaten, 3 Monaten und 6 Monaten.

Die Beurteilung erfolgt visuell. Beurteilt wird die Durchfettung in 4 Stufen.
keine Durchfettung = keine Veränderung in der Durchsicht
gering durchfettet = gering transluzent
durchfettet = transluzent
stark durchfettet = stark transluzent

Die Untersuchungen erfolgen auf unterschiedlichen Papiersorten des täglichen Gebrauchs (Zeitungspapier, Zeitschriftenpapier, Schreibpapier, Posterpapier).

Im folgenden soll die Erfindung anhand von Beispielen erläutert werden, ohne diese damit allerdings einschränken zu wollen.

**Beispiele**

Die Polyurethan-Beschichtungen erfolgten in den Beispielen auf einer üblichen Laborbeschichtungsanlage für kontinuierliche Beschichtungen. Die Bahnbreite betrug 50 cm. Die Beschichtungsspaltbreite war zwischen 0 und 1 cm variabel einstellbar. Die Länge des Wärmekanals betrug ca. 12 m. Die Temperatur im Wärmekanal war in vier Zonen einteilbar und jeweils zwischen Raumtemperatur und 120 °C frei wählbar.

Es wurde eine übliche Mehrkomponenten-Misch- und Dosieranlage mit einem dynamischen Mischsystem verwendet. Der Mischkopf war für zwei flüssige Komponenten konzipiert. Der Mischrotor hatte eine variable Drehzahl bis max. ca. 5000 U/min. Bei den Dosierpumpen dieser Anlage handelte es sich um Zahnradpumpen mit einer Förderleistung von maximal ca. 2 l/min.

Die Polyol-Komponenten beziehungsweise die Komponenten mit den gegenüber Isocyanaten reaktiven Stoffen wurden in einem üblichen beheiz- und evakuierbaren Mischkessel gefertigt. Während des jeweils ca. zweistündigen Mischvorgangs wurde die Temperatur der Mischung auf ca. 70 °C eingestellt und zur Entgasung der Komponenten wurde Vakuum angelegt.

In Tabelle 1 sind die zur Herstellung der Polyurethan-Haftklebstoffe verwendeten Basismaterialien aufgeführt, und zwar jeweils mit Handelsnamen und Hersteller. Die genannten Rohstoffe sind alle frei im Handel erhältlich.

Tabelle 1:

| Zur Herstellung der Polyurethan-Haftklebstoffe eingesetzte Basismaterialien mit Handelsnamen und Hersteller | | |
|---|---|---|
| Handelsname | Chemische Basis Mittlere Molmasse OH- bzw. NCO-Zahl | Hersteller / Lieferant |
| Desmophen 1262 BD ® | Polypropylenglykol, Diol (M=430) (4661 mmol OH / kg) | Bayer |

Tabelle 1: (fortgesetzt)

| Zur Herstellung der Polyurethan-Haftklebstoffe eingesetzte Basismaterialien mit Handelsnamen und Hersteller | | |
|---|---|---|
| Handelsname | Chemische Basis Mittlere Molmasse OH- bzw. NCO-Zahl | Hersteller / Lieferant |
| Voranol P 400 ® | Polypropylenglykol, Diol (M=400) (4643 mmol OH / kg) | Dow |
| Desmophen 1112 BD ® | Polypropylenglykol, Diol (M=1000) (1977 mmol OH / kg) | Bayer |
| Acclaim 4220 N ® | Polypropylenglykol, Diol, hochrein, DMC-katalysiert hergestellt (M=4000) (500 mmol OH / kg) | Bayer |
| Desmophen 1380 BT ® | Polypropylenglykol, Triol (M=450) (6774 mmol OH / kg) | Bayer |
| Desmophen 3061 BT ® | Polypropylenglykol, Triol (M=3000) (1000 mmol OH / kg) | Bayer |
| Desmophen 5035 BT ® | Polypropylenglykol, Triol (M=4800) (624 mmol OH / kg) | Bayer |
| Desmophen 5031 BT ® | Polypropylenglykol, Triol (M=6000) (502 mmol OH / kg) | Bayer |
| Acclaim 6320 N ® | Polypropylenglykol, Triol, hochrein, DMC-katalysiert hergestellt (M=6000) (500 mmol OH / kg) | Bayer |
| Vestanat IPDI ® | Isophorondiisocyanat (M= 222,3) (8998 mmol NCO / kg) | Degussa-Hüls |
| Desmodur N 3300 ® | aliphatisches Polyisocyanat auf Basis Hexamethylendiisocyanat (5143 mmol NCO / kg) | Bayer |
| Desmodur W ® | Dicyclohexylmethandiisocyanat (M= 262) (7571 mmol NCO / kg) | Bayer |
| Desmodur CD ® | modifiziertes Diphenylmethan-4,4'-diisocyanat (7023 mmol NCO / kg) | Bayer |
| Mark DBTL ® | Dibutylzinndilaurat | Nordmann, Rassmann |
| Tinuvin 292 ® | sterisch gehindert. Amin, Lichtschutzmittel | Ciba |
| Tinuvin 400 ® | Triazin-Derivat, UV-Schutzmittel | Ciba |
| Aerosil R202 ® | hydrophobierte, pyrogene Kieselsäure | Degussa-Hüls |

Als Materialien für die elastomeren Trägerfolien wurden weiterhin folgende Elastomere eingesetzt:

Tabelle 2:

| Zur Herstellung der elastomeren Trägerfolien eingesetzte Materialien | | | | |
|---|---|---|---|---|
| Handelsname | Chemische Basis | Hersteller | maximale Zugspannung (N/mm$^2$) | maximale Dehnbarkeit (%) |
| Vector 8508 ® | SBS | Exxon | 31,0 | 900 |
| Kraton G 1652 ® | SEBS | Kraton Polymers | 31,0 | 500 |
| Elvax 310 ® | EVA | Du Pont | 3,3 | 900 |

Die elastomeren Trägerfolien wurden jeweils in einem üblichen Extrusionsverfahren aus den in Tabelle 2 aufgeführten Materialien in 500 mm Breite hergestellt.

Vor der Beschichtung mit dem Polyurethan-Haftklebstoff wurden die elastomeren Trägerfolien einer ein- oder beidseitigen Coronabehandlung unterzogen, je nachdem, ob ein ein- oder beidseitig haftklebriges Produkt hergestellt werden sollte.

**Beispiel 1**

Die beidseitig haftklebrige elastische Klebfolie ist einschichtig. Die Dicke der Schicht beträgt 1,0 mm und besteht aus einem Polyurethan-Haftklebstoff mit folgender Zusammensetzung:

| NCO / OH - Verhältnis: 1,0<br>Verhältnis Anzahl Diol-OH / Anzahl Triol-OH: 1,5 | | | |
|---|---|---|---|
| | Rohstoff | Gewichtsanteil [Gew.-%] | Anzahl der OH-beziehungsweise NCO-Gruppen, bezogen auf den prozentualen Gewichtsanteil |
| A-Komponente | Desmophen 1262 BD ® | 12,0 | 55,9 mmol OH |
| | Desmophen 5031 BT ® | 74,4 | 37,3 mmol OH |
| | Mark DBTL ® | 0,3 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 10,4 | 93,2 mmol NCO |

| Charakterisierende Prüfergebnisse: | |
|---|---|
| Klebkraft auf Stahl, 90° Abzugswinkel:<br>    Vergleichsbeispiel<br>    Klebkraft auf Stahl, 90° Abzugswinkel,<br>    mit dimensionsstabilisierender (unelastischer)<br>    Rückseitenverstärkung der Klebfolie: | 1,5 N/cm<br><br><br><br>1,9 N/cm |
| Klebkraft auf PETP, 90° Abzugswinkel: | 1,9 N/cm |
| Klebkraft auf PVC, 90° Abzugswinkel: | 2,8 N/cm |
| Klebkraft auf Papier 90° Abzugswinkel: | 1,4 N/cm |
| Klebkraft auf Papier 90° Abzugswinkel,<br>nach dreimonatiger Lagerung des Klebverbundes: | 1,2 N/cm |
| Maximale Zugspannung: | $1,3 \text{ N/mm}^2$ |
| Zugspannung bei 200 % Dehnung | $0,2 \text{ N/mm}^2$ |
| maximale Dehnbarkeit: | 1100 % |
| Strippspannung: | $0,5 \text{ N/mm}^2$ |
| Verhältnis Maximale Zugspannung / Strippspannung: | 2,6 |
| Rückstellvermögen: | > 95 % |
| Wiederverwendbarkeit: | > 90 % des Frischwertes |
| Wiederverwendbarkeit nach Verschmutzung: | > 90 % des Frischwertes |
| Haftgrunddurchfettung: | keine Durchfettung nach 6 Mo |

**Beispiel 2**

Die beidseitig haftklebrige elastische Klebfolie ist einschichtig. Die Dicke der Schicht beträgt 1,0 mm und besteht aus einem Polyurethan-Haftklebstoff mit folgender Zusammensetzung:

| NCO / OH - Verhältnis: 1,0 Verhältnis Anzahl Diol-OH / Anzahl Triol-OH: 2,5 | | | |
|---|---|---|---|
| | Rohstoff | Gewichtsanteil [Gew.-%] | Anzahl der OH-beziehungsweise NCO-Gruppen, bezogen auf den prozentualen Gewichtsanteil |
| A-Komponente | Desmophen 1262 BD ® | 17,8 | 82,9 mmol OH |
| | Desmophen 5031 BT ® | 66,1 | 33,2 mmol OH |
| | Mark DBTL ® | 0,3 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 12,9 | 116,1 mmol NCO |

| Charakterisierende Prüfergebnisse: | |
|---|---|
| Klebkraft auf Stahl, 90° Abzugswinkel: Vergleichsbeispiel Klebkraft auf Stahl, 90° Abzugswinkel, mit dimensionsstabilisierender (unelastischer) Rückseitenverstärkung der Klebfolie: | 2,2 N/cm  2,8 N/cm |
| Klebkraft auf PETP, 90° Abzugswinkel: | 2,4 N/cm |
| Klebkraft auf PVC, 90° Abzugswinkel: | 2,9 N/cm |
| Klebkraft auf Papier 90° Abzugswinkel: | 1,8 N/cm |
| Klebkraft auf Papier 90° Abzugswinkel, nach dreimonatiger Lagerung des Klebverbundes: | 1,6 N/cm |
| Maximale Zugspannung: | $1,2 \text{ N/mm}^2$ |
| Zugspannung bei 200 % Dehnung | $0,2 \text{ N/mm}^2$ |
| maximale Dehnbarkeit: | 1000 % |
| Strippspannung: | $0,7 \text{ N/mm}^2$ |
| Verhältnis Maximale Zugspannung / Strippspannung: | 1,7 |
| Rückstellvermögen: | > 95 % |
| Wiederverwendbarkeit: | > 90 % des Frischwertes |
| Wiederverwendbarkeit nach Verschmutzung: | > 90 % des Frischwertes |
| Haftgrunddurchfettung: | keine Durchfettung nach 6 Mo |

**Beispiel 3**

Die beidseitig haftklebrige elastische Klebfolie ist einschichtig. Die Dicke der Schicht beträgt 1,0 mm und besteht aus einem Polyurethan-Haftklebstoff mit folgender Zusammensetzung:

| | Rohstoff | Gewichtsanteil [Gew.-%] | Anzahl der OH-beziehungsweise NCO-Gruppen, bezogen auf den prozentualen Gewichtsanteil |
|---|---|---|---|
| | | | NCO / OH - Verhältnis: 1,0 |
| | | | Verhältnis Anzahl Diol-OH / Anzahl Triol-OH: 2,5 |
| A-Komponente | Desmophen 1262 BD ® | 17,7 | 82,7 mmol OH |
| | Acclaim 6320 N ® | 66,2 | 33,1 mmol OH |
| | Mark DBTL ® | 0,3 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 12,9 | 115,8 mmol NCO |

| Charakterisierende Prüfergebnisse: | |
|---|---|
| Klebkraft auf Stahl, 90° Abzugswinkel: Vergleichsbeispiel | 1,6 N/cm |
| Klebkraft auf Stahl, 90° Abzugswinkel, mit dimensionsstabilisierender (unelastischer) Rückseitenverstärkung der Klebfolie: | 2,1 N/cm |
| Klebkraft auf PETP, 90° Abzugswinkel: | 1,7 N/cm |
| Klebkraft auf PVC, 90° Abzugswinkel: | 2,9 N/cm |
| Klebkraft auf Papier 90° Abzugswinkel: | 1,3 N/cm |
| Klebkraft auf Papier 90° Abzugswinkel, nach dreimonatiger Lagerung des Klebverbundes: | 1,0 N/cm |
| Maximale Zugspannung: | 1,4 N/mm$^2$ |
| Zugspannung bei 200 % Dehnung | 0,2 N/mm$^2$ |
| maximale Dehnbarkeit: | 1200 % |
| Strippspannung: | 0,3 N/mm$^2$ |
| Verhältnis Maximale Zugspannung / Strippspannung: | 4,7 |
| Rückstellvermögen: | > 95 % |
| Wiederverwendbarkeit: | > 90 % des Frischwertes |
| Wiederverwendbarkeit nach Verschmutzung: | > 90 % des Frischwertes |
| Haftgrunddurchfettung: | keine Durchfettung nach 6 Mo |

**Beispiel 4**

Die beidseitig haftklebrige elastische Klebfolie ist einschichtig. Die Dicke der Schicht beträgt 0,8 mm und besteht aus einem Polyurethan-Haftklebstoff mit folgender Zusammensetzung:

| NCO / OH - Verhältnis: 1,0 | | | |
|---|---|---|---|
| Verhältnis Anzahl Diol-OH / Anzahl Triol-OH: 2,5 | | | |
| | Rohstoff | Gewichtsanteil [Gew.-%] | Anzahl der OH-beziehungsweise NCO-Gruppen, bezogen auf den prozentualen Gewichtsanteil |
| A-Komponente | Desmophen 1262 BD ® | 20,5 | 95,7 mmol OH |
| | Desmophen 5035 BT ® | 61,4 | 38,3 mmol OH |
| | Mark DBTL ® | 0,3 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 14,9 | 134,0 mmol NCO |

| Charakterisierende Prüfergebnisse: | |
|---|---|
| Klebkraft auf Stahl, 90° Abzugswinkel: Vergleichsbeispiel Klebkraft auf Stahl, 90° Abzugswinkel, mit dimensionsstabilisierender (unelastischer) Rückseitenverstärkung der Klebfolie: | 2,5 N/cm 3,5 N/cm |
| Klebkraft auf PETP, 90° Abzugswinkel: | 2,4 N/cm |
| Klebkraft auf PVC, 90° Abzugswinkel: | 3,2 N/cm |
| Klebkraft auf Papier 90° Abzugswinkel: | 1,8 N/cm |
| Klebkraft auf Papier 90° Abzugswinkel, nach dreimonatiger Lagerung des Klebverbundes: | 1,8 N/cm |
| Maximale Zugspannung: | $1,3\ N/mm^2$ |
| Zugspannung bei 200 % Dehnung | $0,2\ N/mm^2$ |
| maximale Dehnbarkeit: | 900 % |
| Strippspannung: | $0,8\ N/mm^2$ |
| Verhältnis Maximale Zugspannung / Strippspannung: | 1,6 |
| Rückstellvermögen: | > 95 % |
| Wiederverwendbarkeit: | > 90 % des Frischwertes |
| Wiederverwendbarkeit nach Verschmutzung: | > 90 % des Frischwertes |
| Haftgrunddurchfettung: | keine Durchfettung nach 6 Mo |

**Beispiel 5**

Die beidseitig haftklebrige elastische Klebfolie ist einschichtig. Die Dicke der Schicht beträgt 0,7 mm und besteht aus einem Polyurethan-Haftklebstoff mit folgender Zusammensetzung:

| NCO / OH - Verhältnis: 0,95 | | | |
|---|---|---|---|
| Verhältnis Anzahl Diol-OH / Anzahl Triol-OH: 1,5 | | | |
| | Rohstoff | Gewichtsanteil [Gew.-%] | Anzahl der OH-beziehungsweise NCO-Gruppen, bezogen auf den prozentualen Gewichtsanteil |
| A-Komponente | Desmophen 1262 BD ® | 19,7 | 91,8 mmol OH |
| | Desmophen 3061 BT ® | 61,0 | 61,0 mmol OH |
| | Mark DBTL ® | 0,3 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 16,1 | 145,0 mmol NCO |

| Charakterisierende Prüfergebnisse: | |
|---|---|
| Klebkraft auf Stahl, 90° Abzugswinkel:<br>    Vergleichsbeispiel<br>    Klebkraft auf Stahl, 90° Abzugswinkel,<br>    mit dimensionsstabilisierender (unelastischer)<br>    Rückseitenverstärkung der Klebfolie: | 1,6 N/cm<br><br><br><br>2,3 N/cm |
| Klebkraft auf PETP, 90° Abzugswinkel: | 1,4 N/cm |
| Klebkraft auf PVC, 90° Abzugswinkel: | 2,4 N/cm |
| Klebkraft auf Papier 90° Abzugswinkel: | 1,3 N/cm |
| Klebkraft auf Papier 90° Abzugswinkel,<br>nach dreimonatiger Lagerung des Klebverbundes: | 1,0 N/cm |
| Maximale Zugspannung: | $1,8\ N/mm^2$ |
| Zugspannung bei 200 % Dehnung | $0,3\ N/mm^2$ |
| maximale Dehnbarkeit: | 800 % |
| Strippspannung: | $0,4\ N/mm^2$ |
| Verhältnis Maximale Zugspannung / Strippspannung: | 4,5 |
| Rückstellvermögen: | > 95 % |
| Wiederverwendbarkeit: | > 90 % des Frischwertes |
| Wiederverwendbarkeit nach Verschmutzung: | > 90 % des Frischwertes |
| Haftgrunddurchfettung: | keine Durchfettung nach 6 Mo |

**Beispiel 6**

Die beidseitig haftklebrige elastische Klebfolie ist einschichtig. Die Dicke der Schicht beträgt 1,2 mm und besteht aus einem Polyurethan-Haftklebstoff mit folgender Zusammensetzung:

| | NCO / OH - Verhältnis: 0,9 | | |
|---|---|---|---|
| | Verhältnis Anzahl Diol-OH / Anzahl Triol-OH: 2,5 | | |
| | Rohstoff | Gewichtsanteil [Gew.-%] | Anzahl der OH-beziehungsweise NCO-Gruppen, bezogen auf den prozentualen Gewichtsanteil |
| A-Komponente | Desmophen 1262 BD ® | 16,5 | 77,0 mmol OH |
| | Desmophen 5031 BT ® | 61,5 | 30,8 mmol OH |
| | Mark DBTL ® | 0,3 | |
| | Tinuvin 292 ® | 0,3 | |
| | Tinuvin 400 ® | 0,6 | |
| | Aerosil R202 ® | 2,0 | |
| B-Komponente | Desmophen N 3300 ® | 18,8 | 97,1 mmol NCO |

| Charakterisierende Prüfergebnisse: | |
|---|---|
| Klebkraft auf Stahl, 90° Abzugswinkel:<br>    Vergleichsbeispiel<br>    Klebkraft auf Stahl, 90° Abzugswinkel,<br>    mit dimensionsstabilisierender (unelastischer)<br>    Rückseitenverstärkung der Klebfolie: | 2,4 N/cm<br><br><br><br>3,5 N/cm |
| Klebkraft auf PETP, 90° Abzugswinkel: | 2,4 N/cm |
| Klebkraft auf PVC, 90° Abzugswinkel: | 3,4 N/cm |
| Klebkraft auf Papier 90° Abzugswinkel: | 2,6 N/cm |
| Klebkraft auf Papier 90° Abzugswinkel,<br>nach dreimonatiger Lagerung des Klebverbundes: | 2,8 N/cm |
| Maximale Zugspannung: | 0,8 N/mm$^2$ |
| Zugspannung bei 200 % Dehnung | 0,1 N/mm$^2$ |
| maximale Dehnbarkeit: | 700 % |
| Strippspannung: | 0,7 N/mm$^2$ |
| Verhältnis Maximale Zugspannung / Strippspannung: | 1,1 |
| Rückstellvermögen: | > 95 % |
| Wiederverwendbarkeit: | > 90 % des Frischwertes |
| Wiederverwendbarkeit nach Verschmutzung: | > 90 % des Frischwertes |
| Haftgrunddurchfettung: | keine Durchfettung nach 3 Mo<br>geringe Durchf. nach 6 Mo |

**Beispiel 7**

Die beidseitig haftklebrige elastische Klebfolie ist einschichtig. Die Dicke der Schicht beträgt 1,0 mm und besteht aus einem Polyurethan-Haftklebstoff mit folgender Zusammensetzung:

| NCO / OH - Verhältnis: 0,85 | | | |
| Verhältnis Anzahl Diol-OH / Anzahl Triol-OH: 2,5 | | | |
| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 17,8 | 82,8 mmol OH |
| | Desmophen 5031 BT ® | 66,0 | 33,2 mmol OH |
| | Mark DBTL ® | 0,3 | |
| | Tinuvin 292 ® | 0,3 | |
| | Tinuvin 400 ® | 0,6 | |
| | Aerosil R202 ® | 2,0 | |
| B-Komponente | Desmodur W ® | 13,0 | 98,6 mmol NCO |

| Charakterisierende Prüfergebnisse: | |
|---|---|
| Klebkraft auf Stahl, 90° Abzugswinkel: Vergleichsbeispiel | 2,5 N/cm |
| Klebkraft auf Stahl, 90° Abzugswinkel, mit dimensionsstabilisierender (unelastischer) Rückseitenverstärkung der Klebfolie: | 3,5 N/cm |
| Klebkraft auf PETP, 90° Abzugswinkel: | 2,4 N/cm |
| Klebkraft auf PVC, 90° Abzugswinkel: | 3,1 N/cm |
| Klebkraft auf Papier 90° Abzugswinkel: | 1,8 N/cm |
| Klebkraft auf Papier 90° Abzugswinkel, nach dreimonatiger Lagerung des Klebverbundes: | 2,1 N/cm |
| Maximale Zugspannung: | 0,7 N/mm$^2$ |
| Zugspannung bei 200 % Dehnung | 0,1 N/mm2 |
| maximale Dehnbarkeit: | 1000 % |
| Strippspannung: | 0,4 N/mm$^2$ |
| Verhältnis Maximale Zugspannung / Strippspannung: | 1,8 |
| Rückstellvermögen: | > 95 % |
| Wiederverwendbarkeit: | > 90 % des Frischwertes |
| Wiederverwendbarkeit nach Verschmutzung: | > 90 % des Frischwertes |
| Haftgrunddurchfettung: | keine Durchfettung nach 1 Mo geringe Durchf. nach 3 Mo Durchf. nach 6 Mo |

**Beispiel 8**

Die beidseitig haftklebrige elastische Klebfolie ist einschichtig. Die Dicke der Schicht beträgt 1,0 mm und besteht aus einem Polyurethan-Haftklebstoff mit folgender Zusammensetzung:

| NCO / OH - Verhältnis: 1,0 Verhältnis Anzahl Diol-OH / Anzahl Triol-OH: 2,5 | | | |
|---|---|---|---|
| | Rohstoff | Gewichtsanteil [Gew.-%] | Anzahl der OH-beziehungsweise NCO-Gruppen, bezogen auf den prozentualen Gewichtsanteil |
| A-Komponente | Desmophen 1112 BD ® | 46,2 | 91,3 mmol OH |
| | Desmophen 3061 BT ® | 36,5 | 36,5 mmol OH |
| | Mark DBTL ® | 0,3 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 14,1 | 127,8 mmol NCO |

| Charakterisierende Prüfergebnisse: | |
|---|---|
| Klebkraft auf Stahl, 90° Abzugswinkel: Vergleichsbeispiel Klebkraft auf Stahl, 90° Abzugswinkel, mit dimensionsstabilisierender (unelastischer) Rückseitenverstärkung der Klebfolie: | 1,2 N/cm<br><br><br><br>1,8 N/cm |
| Klebkraft auf PETP, 90° Abzugswinkel: | 1,0 N/cm |
| Klebkraft auf PVC, 90° Abzugswinkel: | 2,1 N/cm |
| Klebkraft auf Papier 90° Abzugswinkel: | 0,9 N/cm |
| Klebkraft auf Papier 90° Abzugswinkel, nach dreimonatiger Lagerung des Klebverbundes: | 0,8 N/cm |
| Maximale Zugspannung: | $0,8 \text{ N/mm}^2$ |
| Zugspannung bei 200 % Dehnung | $0,1 \text{ N/mm}^2$ |
| maximale Dehnbarkeit: | 1300 % |
| Strippspannung: | $0,2 \text{ N/mm}^2$ |
| Verhältnis Maximale Zugspannung / Strippspannung: | 4,0 |
| Rückstellvermögen: | > 95 % |
| Wiederverwendbarkeit: | > 90 % des Frischwertes |
| Wiederverwendbarkeit nach Verschmutzung: | > 90 % des Frischwertes |
| Haftgrunddurchfettung: | keine Durchfettung nach 6 Mo |

**Beispiel 9**

Die beidseitig haftklebrige elastische Klebfolie ist einschichtig. Die Dicke der Schicht beträgt 1,0 mm und besteht aus einem Polyurethan-Haftklebstoff mit folgender Zusammensetzung:

| NCO / OH - Verhältnis: 1,0 | | | |
|---|---|---|---|
| Verhältnis Anzahl Diol-OH / Anzahl Triol-OH: 0,5 | | | |
| | Rohstoff | Gewichtsanteil [Gew.-%] | Anzahl der OH-beziehungsweise NCO-Gruppen, bezogen auf den prozentualen Gewichtsanteil |
| A-Komponente | Acclaim 4220 N® | 73,6 | 36,8 mmol OH |
| | Desmophen 1380 BT® | 11,1 | 73,6 mmol OH |
| | Mark DBTL® | 0,3 | |
| | Tinuvin 292® | 0,3 | |
| | Tinuvin 400® | 0,6 | |
| | Aerosil R202® | 2,0 | |
| B-Komponente | Vestanat IPDI® | 12,1 | 110,4 mmol NCO |

| Charakterisierende Prüferqebnisse: | |
|---|---|
| Klebkraft auf Stahl, 90° Abzugswinkel: Vergleichsbeispiel Klebkraft auf Stahl, 90° Abzugswinkel, mit dimensionsstabilisierender (unelastischer) Rückseitenverstärkung der Klebfolie: | 2,8 N/cm<br><br><br><br>3,3 N/cm |
| Klebkraft auf PETP, 90° Abzugswinkel: | 2,4 N/cm |
| Klebkraft auf PVC, 90° Abzugswinkel: | 3,2 N/cm |
| Klebkraft auf Papier 90° Abzugswinkel: | 2,2 N/cm |
| Klebkraft auf Papier 90° Abzugswinkel, nach dreimonatiger Lagerung des Klebverbundes: | 2,1 N/cm |
| Maximale Zugspannung: | 0,9 N/mm$^2$ |
| Zugspannung bei 200 % Dehnung | 0,1 N/mm$^2$ |
| maximale Dehnbarkeit: | 1400 % |
| Strippspannung: | 0,4 N/mm$^2$ |
| Verhältnis Maximale Zugspannung / Strippspannung: | 2,3 |
| Rückstellvermögen: | > 95 % |
| Wiederverwendbarkeit: | > 90 % des Frischwertes |
| Wiederverwendbarkeit nach Verschmutzung: | > 90 % des Frischwertes |
| Haftgrunddurchfettung: | keine Durchfettung nach 6 Mo |

**Beispiel 10**

Die beidseitig haftklebrige elastische Klebfolie ist einschichtig. Die Dicke der Schicht beträgt 1,0 mm und besteht aus einem Polyurethan-Haftklebstoff mit folgender Zusammensetzung:

| NCO / OH - Verhältnis: 0,85 | | | |
|---|---|---|---|
| Verhältnis Anzahl Diol-OH / Anzahl Triol-OH: 2,5 | | | |
| | Rohstoff | Gewichtsanteil [Gew.-%] | Anzahl der OH-beziehungsweise NCO-Gruppen, bezogen auf den prozentualen Gewichtsanteil |
| A-Komponente | Desmophen1262 BD ® | 17,6 | 81,9 mmol OH |
| | Desmophen 5031 BT ® | 65,3 | 32,8 mmol OH |
| | Mark DBTL ® | 0,3 | |
| | Tinuvin 292 ® | 0,3 | |
| | Tinuvin 400 ® | 0,6 | |
| | Aerosil R202 ® | 2,0 | |
| B-Komponente | Desmodur CD ® | 13,9 | 97,5 mmol NCO |

| Charakterisierende Prüfergebnisse: | |
|---|---|
| Klebkraft auf Stahl, 90° Abzugswinkel: Vergleichsbeispiel Klebkraft auf Stahl, 90° Abzugswinkel, mit dimensionsstabilisierender (unelastischer) Rückseitenverstärkung der Klebfolie: | 2,5 N/cm <br><br><br><br> 3,5 N/cm |
| Klebkraft auf PETP, 90° Abzugswinkel: | 2,0 N/cm |
| Klebkraft auf PVC, 90° Abzugswinkel: | 3,3 N/cm |
| Klebkraft auf Papier 90° Abzugswinkel: | 2,0 N/cm |
| Klebkraft auf Papier 90° Abzugswinkel, nach dreimonatiger Lagerung des Klebverbundes: | 2,6 N/cm |
| Maximale Zugspannung: | 1,0 N/mm$^2$ |
| Zugspannung bei 200 % Dehnung | 0,2 N/mm$^2$ |
| maximale Dehnbarkeit: | 700 % |
| Strippspannung: | 0,5 N/mm$^2$ |
| Verhältnis Maximale Zugspannung / Strippspannung: | 2,0 |
| Rückstellvermögen: | 99 % |
| Wiederverwendbarkeit: | > 90 % des Frischwertes |
| Wiederverwendbarkeit nach Verschmutzung: | > 90 % des Frischwertes |
| Haftgrunddurchfettung: | keine Durchfettung nach Mo geringe Durchf. nach 2 Mo Durchf. nach 6 Mo |

**Beispiel 11**

Die beidseitig haftklebrige elastische Klebfolie ist dreischichtig. Die mittlere Schicht ist eine elastomere Trägerfolie aus Vector 8508 ® in einer Dicke von 50 μm. Die beiden äußeren Polyurethan-Haftklebstoffschichten haben jeweils die gleiche Zusammensetzung wie der Haftklebstoff in Beispiel 1. Die Dicke der beiden Haftklebstoffschichten beträgt jeweils 0,5 mm.

| Charakterisierende Prüfergebnisse: | |
|---|---|
| Klebkraft auf Stahl, 90° Abzugswinkel: Vergleichsbeispiel | 1,3 N/cm |

(fortgesetzt)

| Charakterisierende Prüfergebnisse: | |
|---|---|
| Klebkraft auf Stahl, 90° Abzugswinkel, mit dimensionsstabilisierender (unelastischer) Rückseitenverstärkung der Klebfolie: | 1,9 N/cm |
| Klebkraft auf PETP, 90° Abzugswinkel: | 1,8 N/cm |
| Klebkraft auf PVC, 90° Abzugswinkel: | 2,6 N/cm |
| Klebkraft auf Papier 90° Abzugswinkel: | 1,2 N/cm |
| Klebkraft auf Papier 90° Abzugswinkel, nach dreimonatiger Lagerung des Klebverbundes: | 1,2 N/cm |
| Maximale Zugspannung: | 1,5 N/mm$^2$ |
| Zugspannung bei 200 % Dehnung | 0,2 N/mm$^2$ |
| maximale Dehnbarkeit: | 800 % |
| Strippspannung: | 0,5 N/mm$^2$ |
| Verhältnis Maximale Zugspannung / Strippspannung: | 3,0 |
| Rückstellvermögen: | > 95 % |
| Wiederverwendbarkeit: | > 90 % des Frischwertes |
| Wiederverwendbarkeit nach Verschmutzung: | > 90 % des Frischwertes |
| Haftgrunddurchfettung: | keine Durchfettung nach 6 Mo |

**Beispiel 12**

Die beidseitig haftklebrige elastische Klebfolie ist dreischichtig. Die mittlere Schicht ist eine elastomere Trägerfolie aus Kraton G 1652 ® in einer Dicke von 50 µm. Die beiden äußeren Polyurethan-Haftklebstoffschichten haben jeweils die gleiche Zusammensetzung wie der Haftklebstoff in Beispiel 1. Die Dicke der beiden Haftklebstoffschichten beträgt jeweils 0,4 mm.

| Charakterisierende Prüfergebnisse: | |
|---|---|
| Klebkraft auf Stahl, 90° Abzugswinkel: | 1,4 N/cm |
| Vergleichsbeispiel Klebkraft auf Stahl, 90° Abzugswinkel, mit dimensionsstabilisierender (unelastischer) Rückseitenverstärkung der Klebfolie: | 2,2 N/cm |
| Klebkraft auf PETP, 90° Abzugswinkel: | 1,5 N/cm |
| Klebkraft auf PVC, 90° Abzugswinkel: | 2,5 N/cm |
| Klebkraft auf Papier 90° Abzugswinkel: | 1,4 N/cm |
| Klebkraft auf Papier 90° Abzugswinkel, nach dreimonatiger Lagerung des Klebverbundes: | 0,9 N/cm |
| Maximale Zugspannung: | 1,3 N/mm$^2$ |
| Zugspannung bei 200 % Dehnung | 0,2 N/mm$^2$ |
| maximale Dehnbarkeit: | 900 % |
| Strippspannung: | 0,4 N/mm$^2$ |
| Verhältnis Maximale Zugspannung / Strippspannung: | 3,3 |
| Rückstellvermögen: | > 95 % |
| Wiederverwendbarkeit: | > 90 % des Frischwertes |
| Wiederverwendbarkeit nach Verschmutzung: | > 90 % des Frischwertes |
| Haftgrunddurchfettung: | keine Durchfettung nach 6 Mo |

**Beispiel 13**

Die beidseitig haftklebrige elastische Klebfolie ist dreischichtig. Die mittlere Schicht ist eine elastomere Trägerfolie aus Elvax 310 ® in einer Dicke von 100 µm. Die beiden äußeren Polyurethan-Haftklebstoffschichten haben jeweils die gleiche Zusammensetzung wie der Haftklebstoff in Beispiel 1. Die Dicke der beiden Haftklebstoffschichten beträgt jeweils 0,5 mm.

| Charakterisierende Prüferqebnisse: | |
| --- | --- |
| Klebkraft auf Stahl, 90° Abzugswinkel: | 1,6 N/cm |
| Vergleichsbeispiel | |
| Klebkraft auf Stahl, 90° Abzugswinkel, | |
| mit dimensionsstabilisierender (unelastischer) | |
| Rückseitenverstärkung der Klebfolie: | 2,3 N/cm |
| | |
| Klebkraft auf PETP, 90° Abzugswinkel: | 1,9 N/cm |
| Klebkraft auf PVC, 90° Abzugswinkel: | 3,0 N/cm |
| Klebkraft auf Papier 90° Abzugswinkel: | 1,4 N/cm |
| Klebkraft auf Papier 90° Abzugswinkel, | |
| nach dreimonatiger Lagerung des Klebverbundes: | 1,0 N/cm |
| | |
| Maximale Zugspannung: | $1,4 \text{ N/mm}^2$ |
| Zugspannung bei 200 % Dehnung | $0,2 \text{ N/mm}^2$ |
| maximale Dehnbarkeit: | 1000 % |
| Strippspannung: | $0,5 \text{ N/mm}^2$ |
| Verhältnis Maximale Zugspannung / Strippspannung: | 2,8 |
| Rückstellvermögen: | > 95 % |
| Wiederverwendbarkeit: | > 90 % des Frischwertes |
| Wiederverwendbarkeit nach Verschmutzung: | > 90 % des Frischwertes |
| Haftgrunddurchfettung: | keine Durchfettung nach 6 Mo |

**Beispiel 14**

Die einseitig haftklebrige elastische Klebfolie ist zweischichtig. Die elastomere Trägerfolie besteht aus Elvax 310 ® in einer Dicke von 50 µm. Der Polyurethan-Haftklebstoff hat die gleiche Zusammensetzung wie der Haftklebstoff in Beispiel 1. Seine Dicke beträgt 0,8 mm.

| Charakterisierende Prüfergebnisse: | |
| --- | --- |
| Klebkraft auf Stahl, 90° Abzugswinkel: | 1,7 N/cm |
| Vergleichsbeispiel | |
| Klebkraft auf Stahl, 90° Abzugswinkel, | |
| mit dimensionsstabilisierender (unelastischer) | |
| Rückseitenverstärkung der Klebfolie: | 2,9 N/cm |
| (die Rückseitenverstärkung wurde in diesem Beispiel mit einem üblichen Polyacrylat-Haftklebstoff angeklebt) | |
| | |
| Klebkraft auf PETP, 90° Abzugswinkel: | 1,7 N/cm |
| Klebkraft auf PVC, 90° Abzugswinkel: | 3,1 N/cm |
| Klebkraft auf Papier 90° Abzugswinkel: | 1,4 N/cm |
| Klebkraft auf Papier 90° Abzugswinkel, | |
| nach dreimonatiger Lagerung des Klebverbundes: | 1,2 N/cm |
| | |
| Maximale Zugspannung: | $1,3 \text{ N/mm}^2$ |

(fortgesetzt)

| Charakterisierende Prüfergebnisse: | |
|---|---|
| Zugspannung bei 200 % Dehnung | 0,2 N/mm² |
| maximale Dehnbarkeit: | 800 % |
| Strippspannung: | 0,3 N/mm² |
| Verhältnis Maximale Zugspannung / Strippspannung: | 4,3 |
| Rückstellvermögen: | > 95 % |
| Wiederverwendbarkeit: | > 90 % des Frischwertes |
| Wiederverwendbarkeit nach Verschmutzung: | > 90 % des Frischwertes |
| Haftgrunddurchfettung: | keine Durchfettung nach 6 Mo |

Prüfmuster der Beispiele 1 bis 14 ließen sich von unterschiedlichen Papiersorten (Zeitungspapier, Zeitschriftenpapier, Schreibpapier, Posterpapier) sowohl schälend als auch strippend wieder ablösen, ohne die Papiere zu beschädigen. Eine beschädigungsfreie Ablösung war auch nach einer Verklebungsdauer von 3 Monaten möglich.

Von den Beispielen 1 bis 14 wurden jeweils 3 x 3 cm² große Prüfmuster von Hand zusammengeknüllt. Sie falteten sich nach einigen Minuten von allein wieder auseinander, nahmen vollständig ihre ursprüngliche Form an und waren stets wiederverwendbar.

**Vergleichsbeispiel**

Der Aufbau ist einschichtig. Die Dicke der Schicht beträgt 1,0 mm und besteht aus einem Polyurethan-Haftklebstoff mit folgender Zusammensetzung:

| NCO / OH - Verhältnis: 1,0 Nur Diole, kein Triol | | | |
|---|---|---|---|
| | Rohstoff | Gewichtsanteil [Gew.-%] | Anzahl der OH-beziehungsweise NCO-Gruppen, bezogen auf den prozentualen Gewichtsanteil |
| A-Komponente | Desmophen 1262 BD ® | 37,0 | 172,5 mmol OH |
| | Acclaim 4220 N ® | 38,5 | 19,2 mmol OH |
| | Mark DBTL ® | 0,3 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 21,3 | 191,7 mmol NCO |

Verklebungen auf Papier lassen sich bereits nach einem Tag nicht mehr beschädigungsfrei schälend ablösen. Es kommt bereits nach einer Woche zu Durchfettungen auf Papier. Zusammengeknüllte P rüfmuster f alten sich nicht von allein formstabil auseinander.

**Patentansprüche**

1. Ein- oder beidseitig haftklebrige, mehrfach wiederverwendbare, elastische Klebfolie, bevorzugt in Form von Stanzlingen oder geschnittenen Formteilen, für das rückstands- und beschädigungsfreie Wiederablösen von Verklebungen, insbesondere auf wenig festen Untergründen wie zum Beispiel Papier, sowohl durch Abschälen als auch durch dehnendes Verstrecken der Klebfolie,
**dadurch gekennzeichnet, dass**
die Klebefolie aus zumindest einer Lage eines Haftklebstoffes besteht,
die Klebfolie eine maximale Dehnbarkeit von größer 200 % und ein Rückstellungsvermögen von größer 60 % nach Verstreckung auf 2/3 ihrer maximalen Dehnung hat, und
der Haftklebstoff der Klebfolie auf einem chemisch vernetzten Polyurethan basiert,

wobei die Ausgangsstoffe des chemisch vernetzten Polyurethans mindestens einen gegenüber Isocyanaten reaktiven Stoff mit einer Funktionalität größer 2,0 enthalten, und zwar zu einem Anteil von mindestens 5 Gew.-% bezogen auf die Polyurethanzusammensetzung, wobei

das Molekulargewicht mindestens eines der zur Bildung des Polyurethans eingesetzten Ausgangsstoffes größer oder gleich 1000 ist,

zur Bildung des Polyurethans mindestens difunktionelle Polyisocyanate eingesetzt werden,

das Verhältnis von maximaler Zugspannung zu Strippspannung größer 1,2, bevorzugt größer 1,5, besonders bevorzugt größer 2,0 ist und

die Zugspannung bei einer Dehnung von 200 % maximal 2,0 N/mm$^2$, bevorzugt maximal 1,0 N/mm$^2$, besonders bevorzugt maximal 0,5 N/mm$^2$ beträgt.

2. Elastische Klebfolie nach Anspruch 1,
**dadurch gekennzeichnet, dass**
sich das Polyurethan aus folgenden miteinander zur Reaktion gebrachten Ausgangsstoffen in den angegebenen Verhältnissen zusammensetzt:

mindestens einem mindestens difunktionellen Polyisocyanat,
einer Kombination aus mindestens einem Polypropylenglykol-Diol und mindestens einem Polypropylenglykol-Triol, wobei das Verhältnis der Anzahl der Hydroxylgruppen der Diol-Komponente zu der Anzahl der Hydroxylgruppen der Triol-Komponente bevorzugt zwischen 0,7 und 9,0, besonders bevorzugt zwischen 1,5 und 2,5 liegt,
der Anzahl der Isocyanatgruppen zur Gesamtanzahl der Hydroxylgruppen zwischen 0,5 und 1,3, bevorzugt zwischen 0,8 und 1,2 besonders bevorzugt zwischen 0,95 und 1,05 liegt,

wobei Diole mit einem Molekulargewicht von kleiner oder gleich 1000 mit Triolen kombiniert werden, deren Molekulargewicht größer 1000, bevorzugt größer oder gleich 3000 ist, oder Diole mit einem Molekulargewicht von größer 1000 mit Triolen kombiniert werden, deren Molekulargewicht kleiner 1000 ist.

3. Elastische Klebfolie nach den Ansprüchen 1 oder 2,
**dadurch gekennzeichnet, dass**
die Klebfolie eine maximale Dehnbarkeit größer 300 %, bevorzugt größer 400 % und/oder ein Rückstellungsvermögen von größer 80 %, bevorzugt größer 90 % nach Verstreckung auf 2/3 ihrer maximalen Dehnung hat.

4. Elastische Klebfolie nach zumindest einem der Ansprüche 1 bis 3,
**dadurch gekennzeichnet, dass**
das Polyisocyanat ein aliphatisches oder alicyclisches Diisocyanat ist, bevorzugt ein aliphatisches oder alicyclisches Diisocyanat mit unsymmetrischer Molekülstruktur.

5. Elastische Klebfolie nach zumindest einem der Ansprüche 1 bis 4,
**dadurch gekennzeichnet, dass**
das Isocyanat isophorondiisocyanat ist.

6. Elastische Klebfolie nach zumindest einem der Ansprüche 1 bis 4,
**dadurch gekennzeichnet, dass**
als gegenüber Isocyanaten reaktive Stoffe eingesetzt werden Polyole wie Polyether-Polyole oder Polyester-Polyole.

7. Elastische Klebfolie nach zumindest einem der vorherigen Ansprüche,
**dadurch gekennzeichnet, dass**
auf dem Haftklebstoff einseitig eine Trägerfolie aufgebracht ist.

8. Elastische Klebfolie nach zumindest einem der vorherigen Ansprüche,
**dadurch gekennzeichnet, dass**
die elastische Klebefolie ein Zwei- oder Mehrschichtlaminat ist, bestehend aus einer oder mehreren elastischen Trägerfolien und einer oder mehreren Schichten aus dem polyurethan-basierten Haftklebstoff.

9. Elastische Klebfolie nach zumindest einem der vorherigen Ansprüche,
**dadurch gekennzeichnet, dass**

die Klebfolie an einem oder an mehreren Enden partiell nicht haftklebrig ausgeführt ist, so dass ein oder mehrere Anfasserbereiche vorliegen, von welchen aus das Lösen der Klebbindung vorteilhaft vorgenommen werden kann.

10. Elastische Klebfolie nach zumindest einem der vorherigen Ansprüche,
**dadurch gekennzeichnet, dass**
Rezeptierungsbestandteile wie Katalysatoren, Alterungsschutzmittel (Antioxidantien), Lichtschutzmittel, UV-Absorber, rheologische Additive sowie sonstige Hilfs- und Zusatzstoffe zugemischt sind.

11. Elastische Klebfolie nach zumindest einem der vorherigen Ansprüche,
**dadurch gekennzeichnet, dass**
die Klebefolie Schälfestigkeiten (Klebkräfte) auf Stahl, ermittelt bei einem Abzugswinkel von 90°, zwischen 0.05 und 8 N/cm aufweist.

12. Elastische Klebfolie nach zumindest einem der vorherigen Ansprüche,
**dadurch gekennzeichnet, dass**
die beim Ablösen durch dehnendes Verstrecken in der Verklebungsebene gemessenen Strippspannungen bei weniger als 2,5 N/mm$^2$ liegen.

13. Elastische Klebfolie nach zumindest einem der vorherigen Ansprüche,
**dadurch gekennzeichnet, dass**
diese in Form von Stanzlingen oder geschnittenen Formteilen vorliegt.

14. Verfahren zur Herstellung einer Haftklebefolie nach zumindest einem der vorherigen Ansprüche, wobei

a) in einem Behälter A im wesentlichen die vorgemischten, gegenüber Isocyanat reaktiven Stoffe (Polyol-Komponente) und in einem Behälter B im wesentlichen die Isocyanat-Komponente vorgelegt werden, wobei gegebenenfalls die weiteren Rezeptierungsbestandteile diesen Komponenten bereits zuvor in einem üblichen Mischverfahren zugemischt wurden,
b) die Polyol- und die Isocyanat-Komponente über Präzisionspumpen durch den Mischkopf oder das Mischrohr einer Mehrkomponenten-Misch- und Dosieranlage gefördert, dort homogen vermischt und somit zur Reaktion gebracht werden,
c) die somit gemischten, miteinander chemisch reagierenden Komponenten unmittelbar danach auf ein bahnförmiges Trägermaterial aufgebracht werden, das sich bevorzugt mit konstanter Geschwindigkeit bewegt,
d) das mit der reagierenden Polyurethanmasse beschichtete T rägermaterial durch einen Wärmekanal geführt wird, in dem die Polyurethanmasse zum Haftklebstoff aushärtet,
e) das beschichtete Trägermaterial abschließend in einer Wickelstation aufgewickelt wird.

15. Verwendung einer Haftklebefolie nach zumindest einem der vorherigen Ansprüche zur Befestigung von Notizzetteln, Papierblättern, Kalenderblättern, Streifen, Karten oder Schachteln aus Pappe, Kartonmaterial oder Kunststoff, kleinen Gebrauchsgegenstände aus Kunststoff, Holz, Glas, Stein oder Metall.

**Europäisches Patentamt**

# EUROPÄISCHER RECHERCHENBERICHT

Nummer der Anmeldung

EP 04 00 6286

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X,Y | EP 1 285 955 A (TESA AG) 26. Februar 2003 (2003-02-26) * Seite 3, Zeilen 1-45 * * Seite 4, Zeile 44 - Seite 4, Zeile 46 * * Seite 7, Zeilen 7-9; Beispiele 16-25 * ----- | 1-15 | C09J7/02 |
| X,Y | EP 1 249 480 A (TESA AG) 16. Oktober 2002 (2002-10-16) * Zusammenfassung * * Seite 2, Zeilen 1-31; Ansprüche 1,2,6,10 * ----- | 1-15 | |
| X,Y | GB 1 425 500 A (ADHESIVE TAPES LTD) 18. Februar 1976 (1976-02-18) * Seite 1, Zeilen 31-43 * * Seite 2, Zeilen 25-59; Ansprüche 1,2,8; Beispiele * ----- | 1-15 | |
| D,Y | EP 0 761 793 A (BEIERSDORF AG) 12. März 1997 (1997-03-12) * Seite 3, Zeilen 3-59; Ansprüche 1,5 * ----- | 1-15 | RECHERCHIERTE SACHGEBIETE (Int.Cl.7) |
| Y | US 5 354 597 A (CAPIK KAREN M ET AL) 11. Oktober 1994 (1994-10-11) * Spalte 2, Zeile 24 - Spalte 4, Zeile 57; Ansprüche * ----- | 1-15 | C09J |

Der vorliegende Recherchenbericht wurde für alle Patentansprüche erstellt

| Recherchenort | Abschlußdatum der Recherche | Prüfer |
|---|---|---|
| München | 22. Juli 2004 | Meier, S |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**     EP 04 00 6286

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-07-2004

| Im Recherchenbericht angeführtes Patentdokument | | Datum der Veröffentlichung | Mitglied(er) der Patentfamilie | | Datum der Veröffentlichung |
|---|---|---|---|---|---|
| EP 1285955 | A | 26-02-2003 | DE | 10162613 A1 | 12-06-2003 |
| | | | EP | 1285955 A1 | 26-02-2003 |
| | | | US | 2003059607 A1 | 27-03-2003 |
| EP 1249480 | A | 16-10-2002 | DE | 10113422 A1 | 02-10-2002 |
| | | | EP | 1249480 A1 | 16-10-2002 |
| | | | US | 2003054164 A1 | 20-03-2003 |
| GB 1425500 | A | 18-02-1976 | AU | 7149574 A | 22-01-1976 |
| | | | CH | 567536 A5 | 15-10-1975 |
| | | | DE | 2435218 A1 | 06-02-1975 |
| | | | FR | 2237946 A1 | 14-02-1975 |
| | | | IE | 39633 B1 | 22-11-1978 |
| | | | NL | 7409900 A | 22-01-1975 |
| | | | SE | 7409475 A | 21-01-1975 |
| | | | ZA | 7404658 A | 27-08-1975 |
| EP 0761793 | A | 12-03-1997 | DE | 19531696 A1 | 06-03-1997 |
| | | | DE | 59609912 D1 | 09-01-2003 |
| | | | EP | 0761793 A2 | 12-03-1997 |
| | | | ES | 2186750 T3 | 16-05-2003 |
| | | | JP | 9111201 A | 28-04-1997 |
| | | | US | 2002168516 A1 | 14-11-2002 |
| | | | US | 6402875 B1 | 11-06-2002 |
| US 5354597 | A | 11-10-1994 | AT | 152670 T | 15-05-1997 |
| | | | AU | 637678 B2 | 03-06-1993 |
| | | | AU | 7318491 A | 30-10-1991 |
| | | | CA | 2076031 A1 | 01-10-1991 |
| | | | DE | 69126021 D1 | 12-06-1997 |
| | | | DE | 69126021 T2 | 09-10-1997 |
| | | | EP | 0521875 A1 | 13-01-1993 |
| | | | ES | 2100946 T3 | 01-07-1997 |
| | | | JP | 3007414 B2 | 07-02-2000 |
| | | | JP | 5505569 T | 19-08-1993 |
| | | | KR | 9600740 B1 | 12-01-1996 |
| | | | MX | 173715 B | 23-03-1994 |
| | | | WO | 9115365 A1 | 17-10-1991 |

EPO FORM P0461

Für nähere Einzelheiten zu diesem Anhang : siehe Amtsblatt des Europäischen Patentamts, Nr.12/82